# EUROPÄISCHE PATENTANMELDUNG

(11) **EP 2 594 717 A1**
(43) Veröffentlichungstag der Anmeldung: **22.05.2013**
(21) Anmeldenummer: 13154200.3
(22) Anmeldetag: 20.06.2011
(51) Int. Cl.: E05F 11/48, B60J 1/17

(54) **Kraftfahrzeug-Fensterheber**

(30) Priorität: 06.07.2010 DE 102010031013
(62) Teilanmeldung aus: 11736017.2
(71) Anmelder: Brose Fahrzeugteile GmbH & Co. KG, Hallstadt, 96103 Hallstadt (DE)
(72) Erfinder: Kriese, Olaf, 96450 Coburg (DE); Schultz, Markus, 90425 Nürnberg (DE); Salhoff, Thomas, 96103 Hallstadt (DE); Aschmutat, Raimund, 96271 Grub am Forst (DE)
(74) Vertreter: Ninnemann, Detlef

(57) **Zusammenfassung**

Fahrzeug-Fensterheber mit einer Grundplatte, in die mindestens eine biegbare und/oder verdrillbare Führungsschiene zur Führung eines mit einer Fensterscheibe koppelbaren Mitnehmers entlang einer Verstellrichtung integriert ist und die Befestigungsstellen aufweist, die mit Befestigungsaufnahmen einer Fahrzeugtür verbindbar sind, wobei eine Verdrillung und/oder Biegung der Führungsschiene durch Verbinden der Befestigungsstellen der Grundplatte mit den Befestigungsaufnahmen der Fahrzeugtür erfolgt. Die Führungsschiene (3; 3a, 3b) ist über Verbindungsabschnitte (81 - 87) mit einem starren Bereich (80) der Grundplatte (8, 8') verbunden und mindestens ein Verbindungsabschnitt (81 - 87) weist einen flexiblen Bereich (9) auf.

## Beschreibung

Die Erfindung betrifft einen Kraftfahrzeug-Fensterheber mit einer verdrillbaren oder biegbaren Führungsschiene gemäß dem Oberbegriff des Anspruchs 1 sowie mehrere Verfahren zum Befestigen einer verdrillbaren oder biegbaren Führungsschiene an mindestens einem Träger, die nach mindestens einem der Vorrichtungsansprüche ausgebildet sind.

Aus der DE 199 42 643 C2 ist ein Verfahren zum Befestigen eines Seilfensterhebers an einer Fahrzeugtür sowie die Fahrzeugtür eines Kraftfahrzeugs bekannt, die einen Seilfensterheber mit einer verdrillbaren oder biegbaren Führungsschiene enthält, die einen mit einer Fensterscheibe koppelbaren Mitnehmer verschiebbar lagert und an ihren Enden Befestigungsstellen aufweist, die mit Befestigungsstellen der Fahrzeugtür verspannt werden. Durch das Verspannen der Befestigungsstellen der Führungsschiene mit den Befestigungsstellen der Fahrzeugtür erfolgt eine Verdrillung der zunächst geraden Führungsschiene mit einem vorgegebenen Verdrillungsgrad und/oder eine Biegung der Führungsschiene mit einem vorgegebenen Biegeradius. Dabei liegen die Befestigungsstellen der Fahrzeugtür in Ebenen, die sich derart schneiden, dass sie miteinander einen stumpfen Winkel einschließen, wobei die Schnittlinien der Ebenen senkrecht oder parallel zur Fahrtrichtung des Kraftfahrzeugs, d. h. in Richtung der Z-Achse oder X-Achse, verlaufen.

Da der zur Führung einer Fensterscheibe benötigte Verdrillungsgrad und/oder Biegeradius der Führungsschiene allein durch die Verspannung der Befestigungsstellen erzielt wird, muss die Verdrillung und/oder Biegung der Führungsschiene eines Fensterhebers, der in einem Türschacht der Fahrzeugtür angeordnet wird, nicht vor der Montage der Führungsschiene an die Fahrzeugtür oder an einen an der Fahrzeugtür montierten Träger hergestellt werden. Die Führungsschiene muss somit nicht mehr während der Prägung verdrillt bzw. gebogen werden, sondern die gerade Führungsschiene, die leicht und einfach beispielsweise durch Extrudieren oder Rollieren herstellbar ist, wird erst durch Verspannen der Befestigungsstellen der Führungsschiene mit den Befestigungsstellen der Fahrzeugtür verdrillt und/oder gebogen, was eine kostengünstige Herstellung und Montage eines Fensterhebers in eine Fahrzeugtür ermöglicht.

Neben einem Einsatz einzelner Führungsschienen in einem in eine Fahrzeugtür eingebauten Fensterheber werden auch Türsysteme oder Türmodule verwendet, die einen Aggregateträger, an dem Funktionskomponenten, beispielsweise eine Fensterhebereinheit, ein Lautsprecher, ein Seitenairbag, eine Türschlossanordnung oder dergleichen angeordnet werden, oder eine Grundplatte für eine Fensterhebereinheit enthalten, um eine vormontierbare, vorprüfbare Einheit zu schaffen, die in einfacher Weise an einer Fahrzeugtür montiert werden kann. Als Bestandteile einer Fensterhebereinheit trägt die Grundplatte oder der Aggregateträger dabei mindestens eine Führungsschiene, an der ein mit einer Fensterscheibe verbundener Mitnehmer geführt wird.

Derartige Türsysteme oder Türmodule werden in unterschiedlichsten Ausgestaltungen bei unterschiedlichen Fahrzeugen und Fahrzeugtypen eines Fahrzeugherstellers eingesetzt, wobei jede Variante eines Fahrzeugtyps eine spezifische, individuelle Ausbildung des Türsystems oder Fensterhebers bedingt, weil die Fahrzeugtüren der unterschiedlichen Varianten und Fahrzeugtypen unterschiedlich ausgebildet sind und sich in ihrer konstruktiven Gestaltung und Bauform unterscheiden. Beispielsweise werden bei unterschiedlichen Fahrzeugtüren Fensterscheiben mit unterschiedlicher Kinematik, d.h. unterschiedlichen Krümmungsradien, unterschiedlichen Abzugswinkeln (die angeben, ob eine Fensterscheibe nahezu senkrecht oder schräg in eine Fahrzeugtür eingefahren wird) und unterschiedlichen Verstellwegen einschließlich Drehungen um einzelne oder mehrere Fahrzeugachsen (X-, Y- und Z-Achse) verwendet und machen eine spezifische Anpassung der Führungsschienen oder der in eine Grundplatte integrierten Führungsschienen bzw. der an einem Aggregateträger ausgebildeten Führungsabschnitte erforderlich. Zu diesem Zweck werden einzelne Führungsschienen oder in einen Aggregateträger oder eine Grundplatte integrierte, als Führungsabschnitte ausgebildete Führungsschienen beim Einbauen in eine Fahrzeugtür beispielsweise um die Fahrzeuglängsachse (X-Achse) gebogen und/oder um die Fahrzeughochachse (Z-Achse) verdrillt.

Der vorliegenden Erfindung liegt die Aufgabenstellung zugrunde, einen Kraftfahrzeug-Fensterheber oder ein Türsystem für eine Fahrzeugtür mit einer Grundplatte mit darin integrierten Führungsschienen bereitzustellen, die die Möglichkeiten bei der Verdrillung und/oder Biegung mindestens einer gegebenenfalls in eine Grundplatte bzw. in einen Aggregateträger integrierten Führungsschiene und damit den Einsatz von Führungsschienen oder Grundplatten bzw. Aggregateträgern mit darin integrierten Führungsschienen für unterschiedliche Fahrzeugtüren und Fensterheber-Kinematiken erweitert.

Diese Aufgabe wird erfindungsgemäß durch die Merkmale des Anspruchs 1 gelöst.

Durch die Anordnung mindestens einer Abstützstelle zwischen den Befestigungsaufnahmen des Trägerelements, an der sich die Führungsschiene beim Verspannen der Führungsschiene mit dem Trägerelement abstützt, werden die Möglichkeiten bei der Verdrillung und/oder Biegung einer Führungsschiene eines Fensterhebers erweitert und dadurch das Anwendungs- und Einsatzspektrum eines Fensterhebers mit einer verdrillbaren oder biegbaren Führungsschiene vergrößert.

Ein wesentlicher Vorteil, die Abzugskinematik eines Fensterhebers erst beim Einbauen einer Führungsschiene oder eines Aggregateträgers bzw. einer Grundplatte mit darin integrierten Führungsschienen in ein Trägerelement bzw. eine Fahrzeugtür festzulegen, besteht darin, dass die Führungsschienen bzw. die Grundplatten mit integrierten Führungsschienen ausgehend von einfach und kostengünstig herstellbaren Halbzeugen an die jeweiligen Bedingungen der Fahrzeugtür angepasst werden können, und zwar hinsichtlich des geforderten Biegeradius' (Abzugslinie der Fensterscheibe) und/oder geforderten Verdrillung der Führungsschienen. Somit erlaubt die Erfindung die Verwendung von erfindungsgemäßen Teilen für einen Baureihen übergreifenden Einsatz

Ausgehend vom Stand der Technik gemäß der DE 199 42 643 C2 werden beim Gegenstand der vorliegenden Erfindung nicht nur die Enden oder Endbereiche einer geradlinigen Führungsschiene als Befestigungsstellen genutzt, die durch die Verbindung mit entsprechend ausgerichteten Befestigungsaufnahmen des Trägers die Führungsschiene beim Verspannen mit dem Träger in vorgebbarer Weise biegen und/oder verdrillen, sondern durch die Anordnung mindestens einer Abstützstelle zwischen den Befestigungsaufnahmen des Trägers eine sich formgebend auf die Krümmung und/oder Verdrillung der Führungsschiene beim Verspannen der Führungsschiene mit dem Trägerelement auswirkende Maßnahme geschaffen. Unter "Trägerelement" wird hierbei und im Folgenden die einen Fensterheber aufnehmende Türkarosserie einer Fahrzeugtür, insbesondere ein Türinnenblech, eine in den Türkasten einer Fahrzeugtür einsetzbare Trägerplatte oder ein Funktionsträger für Modultüren oder Türsysteme verstanden. Weiterhin schließt die Bezeichnung "Abstützstelle" auch einen Abstützbereich und damit nicht nur eine punkt-oder linienförmige Abstützung, sondern auch eine flächenförmige Abstützung ein.

Die Anordnung mindestens einer weiteren Befestigungs- und/oder einer Abstützstelle zwischen den Befestigungsaufnahmen des Trägerelements ermöglicht es, nicht nur eine im Wesentlichen gerade, insbesondere extrudierte oder rollierte, Führungsschiene beim Verspannen der Führungsschiene mit dem Trägerelement durch Abstützen der Führungsschiene an der Abstützstelle und Befestigen an den Befestigungsaufnahmen des Trägerelements zu biegen oder zu verdrillen, sondern auch eine mit einem ersten Biegeradius vorgebogene Führungsschiene durch Abstützen und/oder Befestigen der Führungsschiene an der Abstützstelle und Befestigen an den Befestigungsaufnahmen des Trägerelements auf einen zweiten Biegeradius aufzubiegen, der größer ist als der erste Biegeradius, und/oder in vorgebbarer Weise zu verdrillen.

Dadurch kann ein und dieselbe Führungsschiene für unterschiedliche Fahrzeuge und Fahrzeugtypen mit unterschiedlichen Scheibenabzügen oder Scheibenkrümmungen und unterschiedlichen Hüben durch entsprechendes Ablängen der extrudierten oder rollierten Führungsschiene verwendet werden. Zudem ist der Einsatz der gleichen Führungsschiene für linke und rechte Vorder- und Hintertüren eines Fahrzeugs möglich. Zur Herstellung der Führungsschiene wird dabei nur ein Extrudierwerkzeug benötigt, wodurch Investitionen eingespart werden.

Durch das Vorbiegen einer Führungsschiene und gegebenenfalls durch die Anordnung mindestens einer weiteren Befestigungsstelle zwischen den in den Endbereichen der Führungsschiene angeordneten Befestigungsstellen, zwischen denen und der weiteren Befestigungsstelle jeweils mindestens eine Abstützstelle angeordnet ist, sind auch komplexe Konfigurationen der Führungsschiene mit beispielsweise unterschiedlichen Radien bzw. Verdrillungen in der Längserstreckung der Führungsschiene mit einfachen Mitteln zu realisieren.

Alternativ kann eine vorgebogene Führungsschiene durch Abstützen der Führungsschiene an der Abstützstelle und Befestigen an den Befestigungsaufnahmen des Trägerelements auch begradigt werden, damit die Führungsschiene beispielsweise unter Vorspannung an die Abstützstelle angelegt wird, um eine kraft- oder stoffschlüssige Verbindung der Führungsschiene mit der Abstützstelle durch Kleben, Schweißen oder dergleichen herzustellen.

Weiterhin können durch die Anordnung mehrerer Abstützstellen zwischen den in den Endbereichen der Führungsschiene angeordneten Befestigungsstellen mehrere Auflagepunkte vorgesehen werden, die der exakten Biegung der Führungsschiene mit einem Biegeradius oder mehreren Biegeradien oder Verdrillungen entsprechen.

Durch die Anordnung von mehr als zwei Befestigungsstellen ist die Möglichkeit der Schaffung mehrerer Anbindungspunkte und damit einer erhöhten Versteifung und Stabilisierung der Führungsschiene gegeben.

Dabei werden auf einem Kunststoffträger unterschiedliche Aufnahmepositionen für extrudierte oder rollierte Führungsschienen geschaffen und durch eine Befestigung der extrudierten Führungsschiene am Träger wird die Führungsschiene in eine Zwangslage gebracht und nimmt eine bestimmte, definierte Krümmung und Verdrillung ein.

Die Führungsschiene kann sowohl mit einer Trägerplatte bzw. einem Funktionsträger als Trägerelement als auch unmittelbar mit der Fahrzeugtür, im Allgemeinen mit dem Türinnenblech, verspannt werden. Eine weitere Ausführungsvariante besteht darin, mindestens eine Befestigungsaufnahme an der Fahrzeugtür als Trägerelement und mindestens eine Befestigungsaufnahme an einer mit der Fahrzeugtür zu verbindenden Trägerplatte bzw. einem Funktionsträger als Trägerelement vorzusehen, wobei die Befestigungsaufnahmen der Trägerplatte bzw. des Funktionsträgers und der Fahrzeugtür mit entsprechenden Befestigungsstellen der Führungsschiene korrespondieren.

Ein Verspannen der Führungsschiene sowohl mit einer Trägerplatte oder einem Funktionsträger als auch mit einer die Trägerplatte oder den Funktionsträger aufnehmenden Fahrzeugtür als Trägerelemente ermöglicht es, die Führungsschiene beim Verspannen mit der Trägerplatte bzw. dem Funktionsträger vorzubiegen bzw. vorzudrillen und beim Einsetzen und Verbinden mit der Fahrzeugtür als Trägerelement auf den endgültigen Biegeradius oder die endgültige Verdrillung zu verspannen.

Darüber hinaus besteht die Möglichkeit, die Führungsschiene mittels einer am Trägerelement ausgebildeten hakenförmigen Befestigungsaufnahme, die durch eine als Öffnung ausgebildete Befestigungsstelle der Führungsschiene steckbar ist, vorzupositionieren.

Alternativ ist es damit möglich einen ersten Biegeradius der auf der Trägerplatte vormontierten Führungsschiene vorzusehen und einen zweiten Biegeradius bei der Montage der Trägerplatte mit auf der Trägerplatte vormontierter Führungsschiene in die Türkarosserie zu erzeugen.

Bei dieser Variante der erfindungsgemäßen Lösung können somit unterschiedliche Biegeradien bzw. Verdrillungsgrade erzeugt werden und damit eine Anpassung der Führungsschiene auch an komplizierte Konturen bzw. Bewegungsbahnen beim Abzug der Fensterscheibe des Fensterhebers realisiert werden.

Die Art und Form der Befestigungsstellen der Führungsschiene und der Befestigungsaufnahme des Trägerelements sowie der Abstützstelle oder Abstützstellen lässt eine Vielzahl von Varianten zu, die den jeweiligen Anforderungen an die Formung, d.h. Biegung und/oder Verdrillung, bzw. Verspannung der Führungsschiene mit dem Trägerelement bzw. den Trägerelementen angepasst werden können.

Für eine Vormontage der Führungsschiene auf einer Trägerplatte, einem Funktionsträger oder Aggregateträger als erstem Trägerelement und Endmontage des mit der Führungsschiene verbundenen ersten Trägerelements in eine Fahrzeugtür als zweitem Trägerelement ist eine Verbindung geeignet, bei der eine erste Befestigungsaufnahme des Trägerelements als vom Trägerelement abstehender Haken oder Tasche ausgebildet ist, in die ein Ende der Führungsschiene einsteckbar ist und eine zweite Befestigungsaufnahme aus einem vom Trägerelement abstehenden Clips besteht, der die Führungsschiene über eine Öffnung in der Führungsschiene hintergreift. Die Verbindung des ersten Trägerelements mit der darauf vormontierten Führungsschiene mit der Fahrzeugtür als zweitem Trägerelement kann in üblicher Weise über eine Schraubverbindung erfolgen, wobei zur Abdichtung einer in der Türkarosserie vorgesehenen Öffnung eine umlaufende Dichtung zwischen dem Rand der Trägerplatte, dem Funktions- oder Aggregateträger und dem Öffnungsrand der Türkarosserie vorgesehen wird.

Durch diese Ausgestaltung der Befestigungsstellen, Befestigungsaufnahmen und der Abstützstelle zwischen der ersten und zweiten Befestigungsaufnahme wird die Führungsschiene in der Vormontageposition durch das Einstecken des einen Endes der Führungsschiene in die Tasche der Trägerplatte sowie durch die Clipsverbindung gehalten und in X-, Y- und Z-Richtung fixiert und auf einen ersten Biegeradius vorgebogen, während in der anschließenden Endmontage beispielsweise durch Verbinden des anderen Endes der Führungsschiene mit dem Rohbau der Fahrzeugtür ein weiterer Biegeradius erzeugt oder ein definierter Radius der vorzugsweise extrudierten oder rollierten Führungsschiene nach der Befestigung am Türrohbau erzeugt wird.

Alternativ können die Befestigungsaufnahmen des Trägerelements aus einem von der Oberfläche des Trägerelements abstehenden Trägerelementhaken und einem Clips und die Befestigungsstellen der Führungsschiene aus einem Führungsschienenhaken, der den Trägerelementhaken hintergreift, und einem mit dem Clips des Trägerelements zusammenwirkenden Clipsvorsprung bestehen, wobei die Verbindungselemente so ausgebildet sind, dass die Führungsschiene nach dem Einstecken des Führungsschienenhakens in den Trägerelementhaken um die formschlüssige Verbindung des Führungsschienenhakens und Trägerelementhakens verschwenkbar ist bis der Clipsvorsprung der Führungsschiene in den Clips des Trägerelements einrastet.

Durch diese Ausgestaltung der Verbindungselemente ist eine einfache und funktionssichere Verbindung einer Führungsschiene mit einem Trägerelement beim Biegen bzw. Verdrillen der Führungsschiene gewährleistet und die Grundlage für eine erhöhte Stabilität der Führungsschiene durch die Anordnung von Stützbereichen gegeben.

Mit der Anordnung einer Aussparung in der der Führungsschiene zugewandten Oberfläche des Trägerelements wird eine Einstecköffnung des Trägerelementhakens zur Aufnahme eines verlängerten Führungsschienenhakens für einen größeren Hinterschnitt und damit für eine optimale Stabilität geschaffen.

Weitere Varianten der Verbindung einer Führungsschiene mit einem Trägerelement zum Verdrillen und/oder Biegen der Führungsschiene durch Verspannen der Befestigungsstellen der Führungsschiene mit den Befestigungsaufnahmen des Trägerelements mit mindestens einer Abstützstelle zwischen den Befestigungsaufnahmen des Trägerelements sind:
- eine Ausbildung mindestens einer Befestigungsaufnahme des Trägerelements und einer Befestigungsstelle der Führungsschiene und/oder mindestens einer Abstützstelle des Trägerelements als Klebeverbindung zwischen den Oberflächen des Trägerelements und der Führungsschiene, vorzugsweise mit
- mindestens einem zwischen den zu verbindenden Oberflächen des Trägerelements und der Führungsschiene angeordneten, von der Oberfläche des Trägerelements und/oder der Führungsschiene abstehenden Abstandshalter zur Sicherstellung einer definierten Dicke der Klebstoffschicht für eine optimale und dauerhaltbare Klebeverbindung und/oder
- seitlich der durch die Klebeverbindung zu verbindenden Oberflächen des Trägerelements und der Führungsschiene angeordnete Vertiefungen und/oder mindestens eine im Bereich der durch die Klebeverbindung zu verbindenden Oberflächen des Trägerelements und der Führungsschiene angeordnete Öffnung im Trägerelement, in die bzw. über die überschüssiger, nicht ausgehärteter Klebstoff abfließen kann,
- eine Strukturierung der Oberfläche des Trägerelements durch abwechselnde Erhebungen und Vertiefungen, so dass zwischen der Oberfläche der Führungsschiene und den Erhebungen und Vertiefungen der Oberfläche des Trägerelements abwechselnde Abstände zur Aufnahme von Klebstoff gebildet werden,
- eine Ausbildung mindestens einer Befestigungsaufnahme des Trägerelements als Clipsverbindung, in die die Seitenränder der Führungsschiene einclipsbar sind,
- die Herstellung der Führungsschiene aus einem extrudierten, für Laserstrahlung durchlässigen Kunststoff und des Trägerelements aus einem Laserstrahlung absorbierenden Werkstoff, oder umgekehrt einer Führungsschiene aus einem Laserstrahlung absorbierenden Werkstoff und einem Trägerelement aus einem für Laserstrahlung durchlässigen Kunststoff.wobei die Führungsschiene vorgebogen wird und von der Oberfläche des Trägerelements Fixierungselemente abstehen, die die Ränder der vorgebogenen Führungsschiene derart hintergreifen, dass ein Teil der Oberfläche der Führungsschiene zur Anlage an einem Teil der Oberfläche des Trägerelements gebracht wird, so dass die aneinanderliegenden Oberflächenabschnitte der Führungsschiene und des Trägerelements durch Laserschweißen miteinander verbindbar sind,
- eine Ausbildung der mindestens einen Befestigungsstelle der Führungsschiene als Clips, der in eine als Öffnung im Trägerelement ausgebildete Befestigungsaufnahme des Trägerelements einclipsbar ist.
- die Formung eines haken- oder taschenförmigen Anschlags auf der Oberfläche des Trägerelements zur Aufnahme eines Führungsschienenendes und einer von der Oberfläche des Trägerelements abstehenden Montagehilfe zur Ausrichtung der in den haken- oder taschenförmigen Anschlag auf der Oberfläche des Trägerelements eingesteckten Führungsschiene.
- eine rechteck- oder trapezförmige Vertiefung mit vom Rand der Vertiefung waagerecht abgewinkelten Schenkeln des Trägerelements, an die eine rechteck- oder trapezförmige Vertiefung der Führungsschiene angepasst ist, die mit ihren vom Rand der Vertiefung waagerecht abgewinkelten Seitenschenkeln auf den von der rechteck- oder trapezförmige Vertiefung abgewinkelten Schenkeln des Trägerelements aufliegt, wobei durch die Sandwichbauweise die Steifigkeit der Verbindung der Führungsschiene mit dem Trägerelement erhöht wird,
- Befestigungsaufnahmen des Trägerelements und Befestigungsstellen der Führungsschiene aus zueinander beabstandeten Niet- oder Schraubverbindungen oder alternativ Klebeverbindungen zwischen den aneinanderliegenden Oberflächen der Führungsschiene und des Trägerelements,
- Strukturierung des Bodens des kastenförmigen Profils des Trägerelements, um Hohlräume zu schaffen, die ein hohes Widerstandsmoment und damit eine hohe mechanische Stabilität bewirken,
- Ausbildung der Führungsschiene als extrudierte Kunststoffschiene mit in Sandwichbauweise eingelegtem, extrudiertem Vlies, Gewebe, Papier, Folie oder einem metallischen oder nichtmetallischen Einleger zur Steifigkeitsverbesserung,

Bei der Verbindung der Führungsschiene mit dem Trägerelement werden vorzugsweise folgende Materialkombinationen eingesetzt:
- Kunststoff-Führungsschiene mit einem Kunststoff-Trägerelement
- metallische Führungsschiene mit einem metallischen Trägerelement
- metallische Führungsschiene mit einem Kunststoff-Trägerelement
- Kunststoff-Führungsschiene mit metallischem Trägerelement

Als metallische Werkstoffe werden bevorzugt Stahl, Aluminium und Magnesium eingesetzt. Eine Kunststoff-Führungsschiene oder ein Kunststoff-Trägerelement besteht vorzugsweise aus einem Thermoplast und/oder einem Duroplast, die mit und ohne Verstärkungs- oder Füllstoffe, wie beispielsweise einem glasfaserverstärkten Thermoplast, eingesetzt werden. Die Herstellung einer Kunststoff-Führungsschiene erfolgt durch Extrusion, Spritzgießen, Tiefziehen, Blasformen oder Pressen, die eines Kunststoff-Trägerelements durch Spritzgießen, Tiefziehen, Blasformen und Pressen, die einer metallischen Führungsschiene durch Rollieren, Prägen oder Strangpressen, die eines metallischen Trägerelements durch Prägen oder Druckgießen.

Zur Stabilitätserhöhung kann eine Kassette, die einen Seilrollenhalter bzw. eine ein Fensterheberseil umlenkende Seilrolle eines Seilfensterhebers aufnimmt, in die Verbindung der Führungsschiene mit dem Trägerelement, beispielsweise einem Türinnenblech oder einer Trägerplatte bzw. einem Funktionsträger, integriert werden. Hierfür weist die Kassette vorzugsweise zwei einen Hintergriff der Kassette an der Führungsschiene ausbildende Auflageflächen auf, über die die Kassette mit der Führungsschiene verbunden ist, und wird durch eine Aussparung in der Führungsschiene mit der Seilrolle, einem Stufenbolzen mit Innengewinde, auf dem die Seilrolle gelagert ist, und mit dem Trägerelement verbunden, indem eine durch eine Öffnung des Trägerelements gesteckte Schraube mit dem Innengewinde des Stufenbolzens verschraubt wird.

Dabei wird die Kassette entweder über die Auflageflächen am Trägerelement abgestützt und damit belastet oder die Auflageflächen sind vom Trägerelement beabstandet, während der Boden des Stufenbolzens mit Innengewinde am Trägerelement anliegt und dadurch die Kassette entlastet.

Alternativ zum Einsatz einzelner Führungsschienen und deren Verbindung mit einem Trägerelement kann auch ein Türmodul oder Türsystem für eine Fahrzeugtür mit einem Aggregateträger oder einer Fensterheber-Grundplatte mit mindestens einer in den Aggregateträger oder die Grundplatte integrierten, biegbaren und/oder verdrillbaren Führungsschiene zur Führung eines mit einer Fensterscheibe koppelbaren Mitnehmers entlang einer Verstellrichtung eingesetzt werden. Durch eine Verbindung der Führungsschiene mit einem starren Bereich der Grundplatte oder des Aggregateträgers über Verbindungsabschnitte, die mindestens einen flexiblen Bereich aufweisen, erfolgt bei einer Anbindung von Befestigungsstellen des Aggregateträgers oder der Grundplatte mit Befestigungsaufnahmen einer Fahrzeugtür, insbesondere mit dem Türrohbau der Fahrzeugtür, eine Verdrillung und/oder Biegung der Führungsschiene.

Diese Erweiterung der erfindungsgemäßen Lösung für einzelne Führungsschienen eines Fensterhebers auf Grundplatten (oder Aggregateträger) mit mindestens einer in die Grundplatte integrierten Führungsschiene ermöglicht somit ebenfalls eine Verdrillung bzw. Biegung der Führungsschiene beim Einbau der Grundplatte in den Türrohbau einer Fahrzeugtür und damit die Verwendung einer Grundplatte für unterschiedliche Fahrzeuge und Fahrzeugtypen unterschiedlicher Fahrzeughersteller sowie einen Toleranzausgleich beim Einbau der Grundplatte in den Türrohbau der Fahrzeugtür bzw. einen Ausgleich von Fertigungsungenauigkeiten.

Vorzugsweise sind die Grundplatte und die Führungsschiene so beschaffen, dass die Führungsschiene um die Fahrzeuglängsachse (X-Achse) biegbar und um die Fahrzeughochachse (Z-Achse) verdrillbar ist.

Durch diese Verformbarkeit einer Grundplatte oder einer Führungsschiene werden auch komplizierte Verstellwege bzw. Verstellrichtungen beim Abzug einer Fensterscheibe, insbesondere beim Abzug tonnenförmiger Fensterscheiben, realisiert. Beim Einsatz von zwei an den Seitenrändern einer Grundplatte angeordneten Führungsschienen ist der starre Bereich der Grundplatte vorzugsweise zwischen den Führungsschienen angeordnet, während die Befestigungsstellen an den Enden der Führungsschienen und mindestens eine Abstütz- oder weitere Befestigungsstelle zwischen den endseitigen Befestigungsstellen der Führungsschienen vorgesehen sind.

Diese erste Ausführungsform einer flexiblen Grundplatte ermöglicht eine relativ steife Ausführung der Führungsschienen ohne Beeinträchtigung der Möglichkeit einer Biegung und/oder Verdrillung der Führungsschienen zur Realisierung unterschiedlicher AbzugsKinematiken beim Verbinden der Grundplatte mit dem Türrohbau einer Fahrzeugtür.

Alternativ weist die Grundplatte in einer zweiten Ausführungsform zwei Führungsschienen auf, deren mittlere Bereiche über einen starren Querträger miteinander verbunden sind, an dessen Enden Befestigungsstellen angeordnet sind, die mit dem Türrohbau einer Fahrzeugtür verbunden werden, so dass die Enden der Führungsschienen ohne Verbindung zum starren Querträger sind und daraus eine Flexibilität der Führungsschienenschenkel resultiert.

Vorzugsweise sind die Befestigungsstellen zumindest teilweise an den Achsen von Umlenkrollen des Fensterhebers zur Führung und Umlenkung eines Fensterheberseils angeordnet.

Durch die Integration von Befestigungsstellen in die Achsen von Umlenkrollen des Fensterhebers werden die Möglichkeiten der Montage einer Grundplatte in den Türrohbau einer Fahrzeugtür erweitert, indem beispielsweise eine Öffnung im Türinnenblech einer Fahrzeugtür abgedeckt wird, die eine solche Größe aufweist, dass die Verbindung der Grundplatte mit dem Türrohbau nur an den äußeren Enden möglich ist.

Zur Optimierung und Vereinfachung der Montage einer Grundplatte in den Türrohbau einer Fahrzeugtür können als Abstützstellen auch in den Türrohbau der Fahrzeugtür integrierte Bauteile wie Crashbarrieren verwendet werden.

In bevorzugter Ausführungsform sind die Verbindungsabschnitte der Grundplatte als Streben ausgebildet, die mit den Enden und einem mittleren Abschnitt der Führungsschienen verbunden sind.

Die Ausbildung der Verbindungsabschnitte als Streben, insbesondere als Diagonal- und Querstreben, anstelle einer vollflächigen Ausbildung der Verbindung des starren mittleren Bereichs der Grundplatte mit den Führungsschienen schafft zum einen eine Materialersparnis und zum anderen die Voraussetzung für eine gezielte Anordnung flexibler Bereiche in den Streben, um eine definierte Flexibilität für ein Biegen und/oder Verdrillen der Führungsschienen zu erreichen.

Die für das Biegen und/oder Verdrillen der Führungsschienen erforderliche Flexibilität kann dadurch erreicht werden, dass die mit den Enden der Führungsschienen verbundenen Diagonalstreben oder die mit den mittleren Abschnitten der Führungsschiene verbundenen Querstreben die flexiblen Bereiche enthalten.

Während die Anordnung der flexiblen Bereiche in den Diagonalstreben eine hohe Flexibilität in den Endbereichen der Führungsschienen gewährleistet, ermöglicht die Anordnung flexibler Bereiche in den Querstreben eine hohe Flexibilität der Führungsschiene im mittleren Bereich bei relativ starrer Ausbildung der Endbereiche der Führungsschienen.

Die flexiblen Bereiche können auf unterschiedliche Weise hergestellt werden, nämlich
a) durch eine Verringerung des Querschnitts des flexiblen Bereichs gegenüber dem Querschnitt eines starren Bereichs der Verbindungsabschnitte oder Streben, d. h., durch eine Ausdünnung des Materials im flexiblen Bereich,
b) durch eine flächige Ausgestaltung der flexiblen Bereiche bzw. Verwendung einer der Verbindungsabschnitte bzw. Streben,
c) durch eine Kombination der beiden Varianten a) und b), indem die Flexibilität durch Ausdünnung des Materials und durch flächige Ausgestaltung der flexiblen Bereiche bzw. Verwendung von Querschnitten mit geringen Widerstandsmomenten hergestellt wird,
d) durch Einsatz der 2K-Technik, bei der der starre Bereich aus einem starren Material, insbesondere aus einem langglasfaserverstärkten Kunststoff, und der flexible Bereich aus einem flexiblen Material, insbesondere einem thermoplastischen Elastomer (TPE) oder einem Material mit geringerem Elastizitätsmodul, insbesondere aus unverstärktem Polypropylen,
e) durch eine Kombination der Varianten b) und d), indem starre Bereiche aus einer Querschnittsform mit einem hohen Widerstandsmoment mit einem starren Material und flexible Bereiche mit einer Querschnittsform mit einem geringeren Widerstandsmoment als die Querschnittsform des starren Bereichs mit einem flexiblen Material kombiniert werden,
f) durch eine Kombination der Varianten a), b) und d), d.h. durch die Kombination einer Querschnittsverringerung mit einer flächigen Ausgestaltung und Verwendung eines flexiblen Materials für die flexiblen Bereiche und durch die Kombination eines vergrößerten Querschnitts mit hohem Widerstandsmoment und Verwendung eines starren Materials für die starren Bereiche,
g) Herstellung der Flexibilität durch die Federwirkung einer wellenartigen Struktur der Verbindungsabschnitte oder Streben, wobei die wellenartige Struktur
   - in Längsrichtung der Verbindungsabschnitte,
   - in Richtung der Fahrzeughochachse (Z-Achse),
   - in Richtung der Fahrzeuglängsachse (X-Achse) oder
   - in mehreren Bereichen sowohl in Richtung der Fahrzeughochachse (Z-Achse) als auch in Richtung der Fahrzeuglängsachse (X-Achse)
   vorgesehen werden kann.

Zur weiteren Erhöhung der Einsatzmöglichkeiten der erfindungsgemäßen Ausgestaltung einer Grundplatte mit integrierten Führungsschienen für unterschiedliche Fahrzeuge und Fahrzeugtypen unterschiedlicher Fahrzeughersteller wird die Grundplatte als Montagerahmen mit Verbindungsabschnitten ausgebildet, an deren Endbereichen Anlenkungen zur Aufnahme von Führungsschienen für unterschiedliche Fensterheber, Fensterhebertypen und/oder Fahrzeugtüren angeordnet sind, wobei der Montagerahmen vorzugsweise X-förmig mit einem starren, mittleren Bereich und vier jeweils diagonal vom starren mittleren Bereich ausgehenden Diagonalstreben ausgebildet ist, deren Enden abgewinkelt sind und variable Anlenkungen zur Aufnahme unterschiedlicher Führungsschienen aufweisen.

Die in der Zeichnung dargestellten Ausführungsbeispiele sollen die Erfindung erläutern und verschiedene Möglichkeiten der Realisierung der erfindungsgemäßen Lösung aufzeigen. Es zeigen:
- Fig. 1: einen schematischen Längsschnitt durch eine gerade, vorzugsweise extrudierte oder rollierte Führungsschiene und eine Trägerplatte mit zwei Befestigungsaufnahmen und einer dazwischen angeordneten Abstützstelle;
- Fig. 2: einen schematischen Längsschnitt durch die mit der Trägerplatte verspannte und durch die Abstützstelle auf einen vorgebbaren Biegeradius gebogene Führungsschiene gemäß Fig. 1;
- Fig. 3: einen schematischen Längsschnitt durch den Türrohbau einer Fahrzeugtür mit darin eingesetzter Trägerplatte und mit der Trägerplatte verspannter Führungsschiene gemäß Fig. 2;
- Fig. 4: einen schematischen Längsschnitt durch eine vorgebogene Führungsschiene und eine Trägerplatte mit zwei Befestigungsaufnahmen und einer dazwischen angeordneten, ebenfalls als Befestigungsaufnahme ausgebildeten Abstützstelle;
- Fig. 5: einen schematischen Längsschnitt durch die mit der Trägerplatte verspannte und auf einen vorgebbaren Biegeradius gebogene Führungsschiene gemäß Fig. 4;
- Fig. 6: einen schematischen Längsschnitt durch den Türrohbau einer Fahrzeugtür mit darin eingesetzter Trägerplatte und mit der Trägerplatte verspannter Führungsschiene gemäß Fig. 5;
- Fig. 7: einen schematischen Längsschnitt durch eine Trägerplatte mit drei Befestigungsaufnahmen und dazwischen angeordneten Abstützstellen sowie eine mit der Trägerplatte verspannte Führungsschiene;
- Fig. 8: einen schematischen Längsschnitt durch eine Trägerplatte mit drei Abstützstellen zwischen endseitigen Befestigungsaufnahmen und eine mit der Trägerplatte verspannte Führungsschiene;
- Fig. 9: einen schematischen Längsschnitt durch eine Trägerplatte mit fünf Befestigungsstellen und daran befestigter, vorzugsweise vorgebogener Führungsschiene;
- Fig. 10 und 11: einen schematischen Längsschnitt durch eine in eine Fahrzeugtür eingesetzte Baugruppe aus einer mit einem ersten Biegeradius vorgebogenen und im vorgebogenen Zustand auf einer Trägerplatte vormontierten Führungsschiene, die durch Verbinden mit der Fahrzeugtür mit einem zweiten Biegeradius gebogen wird;
- Fig. 12: eine schematische Draufsicht auf ein Trägerelement und eine mit dem Trägerelement über mehrere Befestigungs- und Abstützstellen verspannte Führungsschiene mit einem längsverstellbaren Mitnehmer;
- Fig. 13: einen Schnitt durch eine Befestigungsstelle in einer ersten Variante der Verbindung der Führungsschiene mit der Trägerplatte entlang der Schnittlinie A - A gemäß Fig. 12;
- Fig. 14: einen Schnitt durch eine Abstützstelle der ersten Variante der Verbindung der Führungsschiene mit der Trägerplatte entlang der Schnittlinie B - B gemäß Fig. 12;
- Fig. 15: einen Schnitt durch eine Befestigungsstelle einer zweiten Variante der Verbindung der Führungsschiene mit der Trägerplatte während der Montage der Führungsschiene an die Trägerplatte;
- Fig. 16: einen Schnitt durch die Befestigungsstelle der zweiten Variante gemäß Fig. 15 nach der Verbindung der Führungsschiene mit der Trägerplatte entlang der Schnittlinie A - A gemäß Fig. 12;
- Fig. 17: einen Schnitt durch eine Befestigungsstelle einer Abwandlung der zweiten Variante der Verbindung der Führungsschiene mit der Trägerplatte während der Montage der Führungsschiene an die Trägerplatte;
- Fig. 18: einen Schnitt durch die Befestigungsstelle der Abwandlung der zweiten Variante gemäß Fig. 17 nach der Verbindung der Führungsschiene mit der Trägerplatte entlang der Schnittlinie A - A gemäß Fig. 12;
- Fig. 19 - 23: eine Draufsicht und Querschnitte durch die Verbindung einer Führungsschiene mit einem Trägerelement über Klebeverbindungen mit Justierhilfen und Clipsen zur Fixierung der Führungsschiene am Trägerelement bis zum Aushärten des Klebstoffs in verschiedenen Varianten;
- Fig. 24: einen Querschnitt durch die Verbindung eines Trägerelements und einer Führungsschiene mit einem Einleger zur Erhöhung der Steifigkeit der extrudierten Führungsschiene;
- Fig. 25: einen Querschnitt durch eine Koextrusion einer Führungsschiene und eines Führungsschenkels mit optimierten Gleiteigenschaften;
- Fig. 26: einen Querschnitt durch die Verbindung eines Trägerelements und einer Führungsschiene mit Hohlräumen und geschlossenen Profilen für ein hohes Widerstandsmoment und hoher mechanischer Stabilität;
- Fig. 27 - 29: Draufsichten und einen Längsschnitt durch die Verbindung eines Trägerelements und einer Führungsschiene mittels einer Klebstofffläche, Clipsen zum Fixieren der Verbindung bis zum Aushärtendes Klebstoffs und einer strukturierten Oberfläche des Trägerelements zur Klebstoffaufnahme;
- Fig. 30 - 32: eine Draufsicht und Querschnitte durch die Verbindung eines Trägerelements mit einer Führungsschiene in Sandwichbauweise mit einem Niet oder einer Schraube zur Sicherung der Verbindung;
- Fig. 33 - 35: Querschnitte durch die Verbindung eines Trägerelements mit einer Führungsschiene mit vorgebogener Grundfläche, Sicherung der Verbindung mittels Clipse und Herstellen einer dauerhaften Verbindung durch Laserschweißen und
- Fig. 36 - 38: drei Ausführungsbeispiele für Durchschraublösungen zur Stabilitätserhöhung bei der Verbindung einer Führungsschiene mit einem Trägerelement über einen Kassette und/oder einen Stufenbolzen mit Innengewinde.
- Fig. 39: eine schematische Ansicht einer Grundplatte mit zwei in die Grundplatte integrierten Führungsschienen für einen Fensterheber;
- Fig. 40 und 41: schematische Ansichten einer Fahrzeugtür mit einer Anordnung der Grundplatte gemäß Fig. 1 für verschiedene Abzugswinkel der Fensterscheibe eines Fensterhebers;
- Fig. 42: eine schematische Ansicht einer Grundplatte mit starrem mittleren Bereich und flexiblen Bereichen in Diagonalstreben der Verbindungsabschnitte;
- Fig. 43: eine schematische Ansicht einer Grundplatte mit starrem mittleren Bereich und flexiblen Bereichen in Querstreben der Verbindungsabschnitte;
- Fig. 44: einen schematischen Längsschnitt durch eine vorgebogene Führungsschiene in unverspanntem Zustand vor dem Einbau in eine Fahrzeugtür;
- Fig. 45: einen schematischen Längsschnitt durch die bei der Verbindung mit dem Türrohbau der Fahrzeugtür zurück gebogene Führungsschiene gemäß Fig. 44;
- Fig. 46: einen schematischen Längsschnitt durch die bei der Verbindung mit dem Türrohbau der Fahrzeugtür weiter gebogene Führungsschiene gemäß Fig. 44;
- Fig. 47: eine schematische Ansicht einer Grundplatte mit einem starren Querträger und integrierten, flexiblen Führungsschienen;
- Fig. 48: eine schematische Seitenansicht einer Fahrzeugtür mit einem Ausschnitt im Türrohbau und am Türrohbau befestigter Grundplatte mit integrierten Führungsschienen;
- Fig. 49: einen schematischen Längsschnitt durch die Fahrzeugtür entlang der Schnittlinie A-A gemäß Fig. 48 mit innen liegender Grundplatte;
- Fig. 50: einen schematischen Längsschnitt durch die Fahrzeugtür entlang der Schnittlinie A-A gemäß Fig. 48 mit außen liegender Grundplatte;
- Fig. 51: eine schematische Draufsicht und Seitenansicht einer Grundplatte im unverspannten Zustand;
- Fig. 52: eine schematische Draufsicht und Seitenansicht der Grundplatte gemäß Fig. 51 nach dem Verbinden mit dem Türrohbau einer Fahrzeugtür und gegeneinander verdrehten bzw. gekippten Führungsschienen;
- Fig. 53: eine schematische Draufsicht und Seitenansicht der Grundplatte gemäß Fig. 51 nach dem Verbinden mit dem Türrohbau einer Fahrzeugtür mit in entgegen gesetzter Richtung verdrehten bzw. gekippten Führungsschienen;
- Fig. 54: eine schematische Ansicht einer Grundplatte mit starrem mittleren Bereich und flexiblen Bereichen in Diagonalstreben der Verbindungsabschnitte entsprechend Fig. 42;
- Fig. 55: einen Schnitt durch eine Diagonalstrebe entlang der Schnittlinie A-A gemäß Fig. 54;
- Fig. 56: eine schematische Ansicht einer Grundplatte mit starrem mittleren Bereich und flexiblen Bereichen in Diagonalstreben der Verbindungsabschnitte entsprechend Fig. 42;
- Fig. 57: einen Schnitt durch eine Diagonalstrebe entlang der Schnittlinie B-B gemäß Fig. 56;
- Fig. 58: einen Schnitt durch eine Diagonalstrebe mit einem aus einem flexiblen Material hergestellten flexiblen Bereich entlang der Schnittlinie A-A gemäß Fig. 54;
- Fig. 59: eine Kombination der Varianten gemäß den Fig. 55, 57 und 58 zur Herstellung eines flexiblen Bereichs in einer Diagonalstrebe in einem Schnitt entlang der Schnittlinie A-A gemäß Fig. 54;
- Fig. 60: eine Kombination der Varianten gemäß den Fig. 55, 57 und 58 zur Herstellung eines flexiblen Bereichs in einer Diagonalstrebe in einem Schnitt entlang der Schnittlinie B-B gemäß Fig. 56;
- Fig. 61: eine schematische Ansicht einer Grundplatte mit integrierten Führungsschienen und einer wellenartigen Struktur der Diagonalstreben;
- Fig. 62: einen Schnitt durch die wellenartige Struktur entlang der Schnittlinie A-A gemäß Fig. 61;
- Fig. 63: eine schematische Ansicht einer Grundplatte mit integrierten Führungsschienen mit einer wellenartigen Struktur für einen flexiblen Bereich zur Biegung der Führungsschienen um die Fahrzeuglängsachse;

- Fig. 64: eine schematische Ansicht einer Grundplatte mit integrierten Führungsschienen mit einer wellenartigen Struktur für einen flexiblen Bereich zur Biegung der Führungsschienen um die Fahrzeughochachse;
- Fig. 65: eine schematische Ansicht einer Grundplatte mit integrierten Führungsschienen mit einer wellenartigen Struktur für einen flexiblen Bereich zur Biegung der Führungsschienen um die Fahrzeuglängsachse und Fahrzeughochachse;
- Fig. 66: eine schematische Ansicht eines Montagerahmens mit integrierten, variablen Führungsschienen für einen baureihenübergreifenden Einsatz nach dem Baukastenprinzip;
- Fig. 67: einen Schnitt entlang der Schnittlinie A-A gemäß Fig. 66 zur Erläuterung des Funktionsprinzips des Montagerahmens mit integrierten, variablen Führungsschienen gemäß Fig. 66 und
- Fig. 68-70: schematische Darstellungen beim Einsatz des Montagerahmens gemäß Fig. 66 für unterschiedliche Fahrzeuge bzw. Fahrzeugtüren.

In der nachfolgenden Beschreibung verschiedener Ausführungsbeispiele der erfindungsgemäßen Lösung wird unter der Bezeichnung "Trägerelement" eine Trägerplatte, ein Funktions- oder Aggregateträger bzw. der Türrohbau einer Fahrzeugtür verstanden. Die Bezeichnungen "Befestigungsstelle" und "Abstützstelle" schließen auch Befestigungsbereiche und Abstützbereiche, d. h. nicht nur punkt- oder linienförmige Verbindungen einer Führungsschiene mit einem Trägerelement bzw. Anlagen einer Führungsschiene an einem Trägerelement, sondern auch flächige Verbindungen und Anlagen, ein.

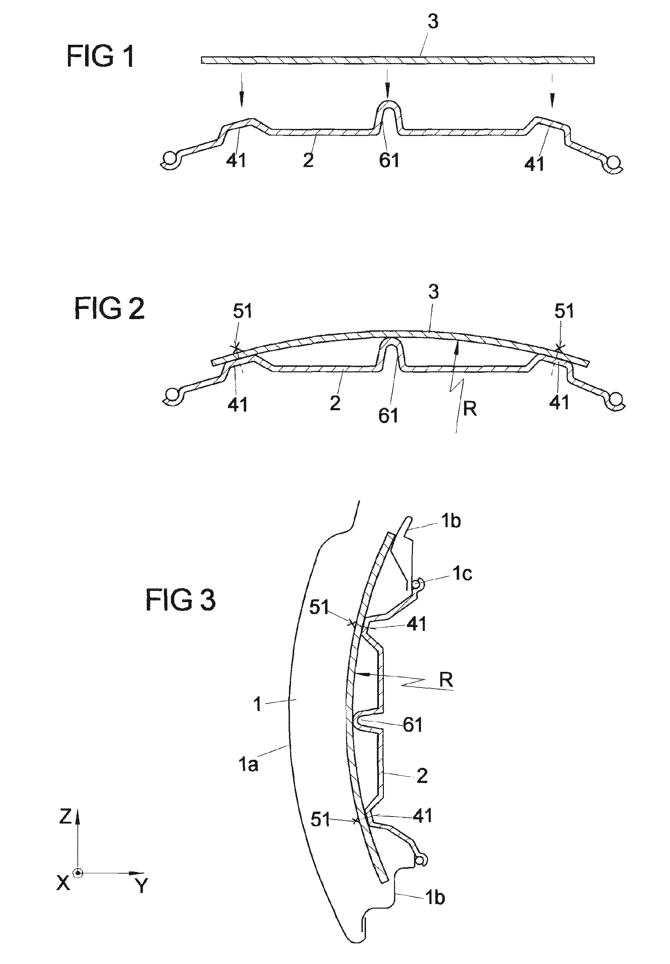

Fig. 1 zeigt einen schematischen Längsschnitt durch eine gerade, vorzugsweise aus einem Kunststoff extrudierte oder einem metallischen Werkstoff rollierte Führungsschiene 3 sowie einen Längsschnitt durch ein Trägerelement 2 mit zwei den Endbereichen der Führungsschiene 3 zugeordneten Befestigungsaufnahmen 41 und eine mittig oder außermittig der Befestigungsaufnahmen 41 angeordneten Abstützstelle 61. Durch Auflegen der Führungsschiene 3 in Pfeilrichtung auf die Befestigungsaufnahmen 41 und die Abstützstelle 61 sowie durch Verbinden der Endbereiche der Führungsschiene 3 an den Befestigungsstellen 51 der Führungsschiene 3 mit den Befestigungsaufnahmen 41 des Trägerelements 2 wird die Führungsschiene 3 gemäß Fig. 2 mit einem Biegeradius R gebogen. Nicht dargestellt ist eine mögliche zusätzliche Verdrillung der Führungsschiene 3 durch eine nicht miteinander fluchtende Anordnung der Befestigungsaufnahmen 41 und der Abstützstelle 61, so dass diese in Längsrichtung einen Winkel zwischen sich einschließen, der das Maß der Verdrillung der Führungsschiene 3 in Längsrichtung bestimmt.

Fig. 3 zeigt einen schematischen Längsschnitt durch den Türrohbau einer Fahrzeugtür 1 mit einem Türaußenblech 1 a und einem Türinnenblech 1b mit in die Fahrzeugtür 1 eingesetztem und in der Vormontageposition gemäß Fig. 2 mit der Führungsschiene 3 verspanntem Trägerelement 2, das mit dem Türinnenblech 1 b der Fahrzeugtür 1 in an sich bekannter Weise verbunden wird, wobei eine am Rand des Trägerelements 2 umlaufende Dichtung 1c eine Öffnung im Türinnenblech 1b abdichtet. Da nur das Trägerelement 2 mit darauf vormontierter Führungsschiene 3 am Türinnenblech 1b der Fahrzeugtür 1 befestigt wird, bleibt der Biegeradius R der Führungsschiene 3, der beim Verspannen der Führungsschiene 3 mit dem Trägerelement 2 in der Vormontage erzeugt wurde, erhalten.

Durch die Anordnung der Abstützstelle 61 zwischen den Befestigungsaufnahmen 41 des Trägerelements 2 werden nicht nur die Endbereiche der Führungsschiene 3 zum Verspannen der Führungsschiene zur Erzeugung einer Biegung und/oder Verdrillung der Führungsschiene 3 eingesetzt, sondern auch der Abstützpunkt 61 genutzt, der sich formgebend auf die Krümmung und/oder Verdrillung der Führungsschiene 3 auswirkt.

Zur Verdeutlichung der Einbaulage des Trägerelements 2 mit darauf vormontierter Führungsschiene 3 ist in Fig. 3 ein Achsenkreuz mit der Fahrzeuglängsachse X, der Fahrzeugquerachse Y und der Fahrzeughochachse Z eingezeichnet, das die Ausrichtung des Trägerelements 2 und der Führungsschiene 3 in der Fahrzeugtür 1 verdeutlicht.

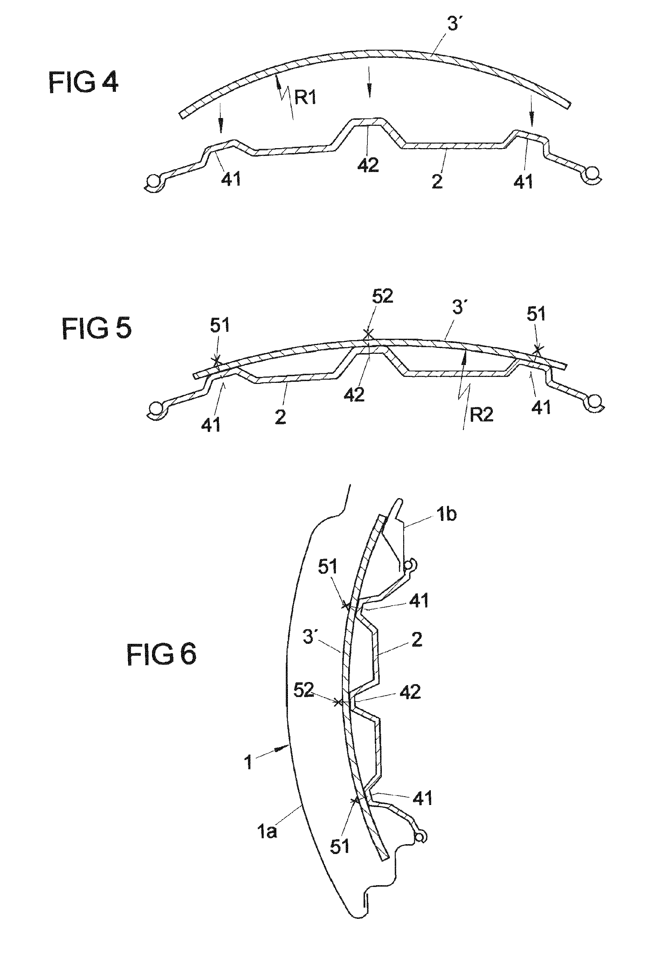

Die Bedeutung der Abstützstelle 61 wird besonders an dem nachfolgend in den Fig. 4 bis 6 dargestellten Ausführungsbeispiel deutlich, das sich auf eine vorgebogene Führungsschiene 3' bezieht, die mit einem Trägerelement 2 verbunden wird, das zwei den Endbereichen der vorgebogenen Führungsschiene 3' zugeordnete Befestigungsaufnahmen 41 und eine dazwischen liegende Befestigungsaufnahme 42 aufweist. Durch Anlegen der vorgebogenen Führungsschiene 3' in Richtung der in Fig. 4 eingetragenen Pfeile an das Trägerelement 2 und daran anschließendes Verbinden der Befestigungsstellen 51, 52 der vorgebogenen Führungsschiene 3' mit den Befestigungsaufnahmen 41, 42 des Trägerelements 2 wird die zuvor auf einen Biegeradius R1 vorgebogene Führungsschiene 3' auf einen vom Biegeradius R1 abweichenden Biegeradius R2 gebogen und in dieser Vormontageposition mit dem Trägerelement 2 verspannt.

Fig. 6 zeigt einen schematischen Längsschnitt durch den Türrohbau der Fahrzeugtür 1 mit dem Türaußenblech 1 a und dem Türinnenblech 1b mit in die Fahrzeugtür 1 eingesetztem und in der Vormontageposition gemäß Fig. 5 mit der Führungsschiene 3 verspanntem und mit dem Türinnenblech 1b der Fahrzeugtür 1 verbundenem Trägerelement 2. Da nur das Trägerelement 2 am Türinnenblech 1b der Fahrzeugtür 1 befestigt wird, bleibt der Biegeradius R2 der Führungsschiene 3', der beim Verspannen der Führungsschiene 3' mit dem Trägerelement 2 in der Vormontage erzeugt wurde, erhalten.

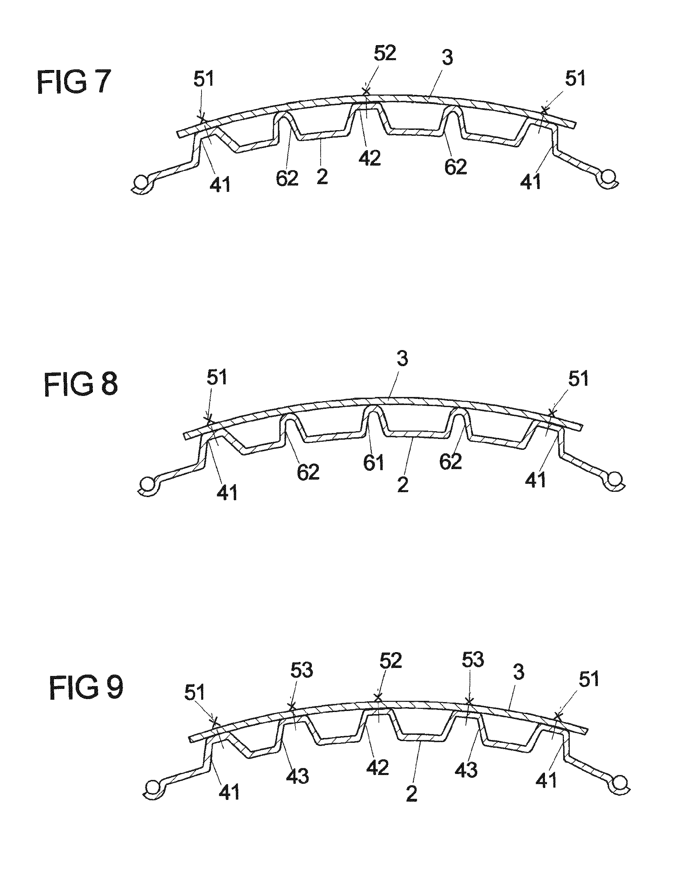

In den Fig. 7 bis 9 sind in schematischen Längsschnitten durch ein Trägerelement 2 mit vormontierter Führungsschiene 3 weitere Varianten der erfindungsgemäßen Lösung dargestellt, die aus den beiden vorbeschriebenen Ausführungsbeispielen ableitbar sind.

Fig. 7 zeigt eine Variante mit einem Trägerelement 2, das zwei den Endbereichen der Führungsschiene 3 zugeordnete endseitige Befestigungsaufnahmen 41 sowie eine zwischen den endseitigen Befestigungsaufnahmen 41 angeordnete mittlere Befestigungsaufnahme 42 aufweist. Zwischen der endseitigen Befestigungsaufnahme 41 und der mittleren Befestigungsaufnahme 42 ist jeweils eine Abstützstelle 62 vorgesehen, die sich in Verbindung mit den Befestigungsaufnahmen 41, 42 formgebend auf die Krümmung und/oder Verdrillung der Führungsschiene 3 nach der Verbindung der Befestigungsstellen 51, 52 der Führungsschiene 3 mit den Befestigungsaufnahmen 41, 42 des Trägerelements 2 auswirkt.

In Fig. 8 ist in einem schematischen Längsschnitt eine Ausführungsform dargestellt, bei der das Trägerelement 2 mehrere, in dem dargestellten Ausführungsbeispiel drei, Abstützstellen 61, 62 zwischen den den Endbereichen der Führungsschiene zugeordneten Befestigungsaufnahmen 41 aufweist. Beim Verbinden der endseitigen Befestigungsstellen 51 der Führungsschiene 3 mit den Befestigungsaufnahmen 41 des Trägerelements 2 legt sich die Führungsschiene 3 an die Abstützstellen 61, 62 an, die somit die Krümmung bzw. Verdrillung der Führungsschiene 3 beim Verspannen der Führungsschiene 3 mit dem Trägerelement 2 mitbestimmen.

Fig. 9 zeigt in einem schematischen Längsschnitt eine Erweiterung des Ausführungsbeispiels gemäß den Fig. 4 bis 6, wobei in der Ausführungsform gemäß Fig. 9 neben den den Endbereichen der Führungsschiene 3 zugeordneten Befestigungsaufnahmen 41 und einer mittleren Befestigungsaufnahme 42, die mit den Befestigungsstellen 51, 52 der Führungsschiene 3 verbunden werden, noch zwei weitere Befestigungsaufnahmen 43 zwischen den endseitigen Befestigungsaufnahmen 41 und der mittleren Befestigungsaufnahme 42 angeordnet sind, die mit Befestigungsstellen 53 der Führungsschiene 3 verbunden werden. In dieser Ausführungsform bilden die Befestigungsaufnahmen 42 und 43 Abstützstellen, die gleichzeitig der Befestigung der Führungsschiene 3, insbesondere einer vorgebogenen Führungsschiene 3, dienen.

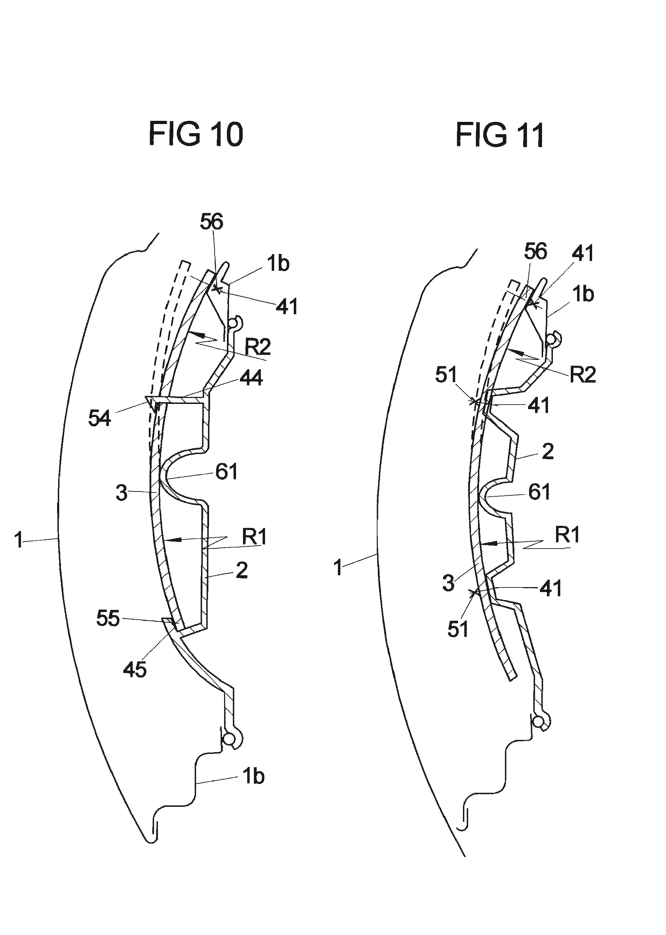

In den Fig. 10 und 11 sind in einem schematischen Längsschnitt zwei Ausführungsbeispiele dargestellt, bei denen die auf einer Trägerplatte, einem Funktionsträger oder Aggregateträger 2 vormontierte und mit einem ersten Biegeradius R1 vorgebogene Führungsschiene 3 nach dem Einsetzen der Trägerplatte, des Funktions- oder Aggregateträgers 2 in eine Fahrzeugtür 1 an einer oberen Befestigungsstelle 56 mit der Fahrzeugtür 1 als zweitem Trägerelement zur Erzeugung eines zweiten Biegeradius R2 bzw. einer zusätzlichen Verdrillung verbunden wird.

Fig. 10 zeigt in einem schematischen Längsschnitt durch eine Fahrzeugtür 1 eine Vormontagegruppe, bestehend aus einer Trägerplatte bzw. einem Funktions- oder Aggregateträger 2 als erstem Trägerelement mit auf der Trägerplatte 2 vormontierter, extrudierter Führungsschiene 3, wobei die Vormontageposition der Führungsschiene 3 in gestrichelten Linien dargestellt ist. In dieser Vormontageposition ist die Führungsschiene 3 über zwei Befestigungsstellen 54, 55 mit der Trägerplatte 2 verbunden, die eine erste Befestigungsaufnahme 44 aufweist, die aus einem senkrecht von der Oberfläche der Trägerplatte 2 abstehenden Clips besteht, der durch eine als Öffnung ausgebildete erste Befestigungsstelle 54 der Führungsschiene 3 gesteckt wird, um die Führungsschiene 3 in der Vormontageposition zu fixieren.

Eine zweite Befestigungsaufnahme 45 der Trägerplatte 2 ist als Haken oder Tasche ausgebildet, in die das untere, eine untere Befestigungsstelle 55 bildende Ende der Führungsschiene 3 in der Vormontageposition eingesteckt wird. Die als Haken oder Tasche ausgebildete Befestigungsaufnahme 45 bestimmt die Positionierung der Führungsschiene 3 in Y- und Z-Richtung des Kraftfahrzeugs.

Durch eine zwischen den Befestigungsaufnahmen 44, 45 auf der Trägerplatte 2 angeordnete Abstützstelle 61 wird ein Auflagepunkt für die Führungsschiene 3 vorgegeben, durch die in Verbindung mit der Anordnung und Ausgestaltung der Befestigungsaufnahmen 44, 45 ein erster Biegeradius R1 der Führungsschiene 3 in der Vormontageposition bestimmt wird.

Nach dem An- bzw. Einsetzen der Vormontagegruppe in eine im Türinnenblech 1b der Fahrzeugtür 1 vorgesehene Öffnung des Türrohbaus der Fahrzeugtür 1 wird das obere Ende der Führungsschiene 3 mit der Befestigungsstelle 56 mit dem Brüstungsbereich des Türinnenblechs 1b als Befestigungsaufnahme 41 beispielsweise mittels einer Schraubverbindung verbunden, wodurch die Führungsschiene 3 einen zweiten Biegeradius R2 erhält, der mit dem ersten Biegeradius R1 übereinstimmen oder von diesem abweichen kann. Dadurch erhält die Führungsschiene 3 eine vorgegebene Abzugslinie beim Anheben und Absenken des auf der Führungsschiene 3 längsverstellbaren Mitnehmers, der eine Fensterscheibe zum Öffnen und Schließen einer Türöffnung entlang der Führungsschiene 3 aufnimmt.

Während die Anordnung des Clips 44 auf der Trägerplatte 2 die Ausrichtung der Führungsschiene 3 in X-Richtung bestimmt, legt die Länge des Clips 44 bzw. die Höhe der Abstützstelle 61 den Biegeradius R1 der Führungsschiene 3 in der Vormontageposition fest. Bei Anordnung eines in X-Richtung des Kraftfahrzeugs gegenüber dem Haken oder der Tasche 45 versetzten Clips 44 wird somit die Führungsschiene 3 in der einen oder anderen Richtung in X-Richtung geneigt.

Fig. 11 zeigt in einem Längsschnitt eine in eine Fahrzeugtür 1 eingesetzte Vormontagegruppe bestehend aus einer Trägerplatte 2, insbesondere einem Funktions- oder Aggregateträger, mit einer mit der Trägerplatte 2 verspannten Führungsschiene 3 entsprechend der Ausführungsform gemäß den Fig. 1 bis 3. In der Vormontageposition ist die Führungsschiene 3 durch Anbinden der Befestigungsstellen 51 an den Befestigungsaufnahmen 41 der Trägerplatte 2 sowie durch Abstützen an der zwischen den Befestigungsaufnahmen 41 an der Trägerplatte 2 angeordneten Abstützstelle 61 auf einen Biegeradius R1 gebogen. Nach dem Einsetzen der Vormontagegruppe in die Öffnung der Fahrzeugtür 1 wird das obere Ende der extrudierten Führungsschiene 3 mit der Türbrüstung 1 b als Befestigungsaufnahme 41 an der Befestigungsstelle 56 beispielsweise durch Verschrauben mit dem Türinnenblech 1b verbunden, wodurch im oberen Bereich der Führungsschiene 3 zwischen der oberen Befestigungsstelle 51 und der Befestigungsstelle 56 ein zweiter Biegeradius R2 der Führungsschiene 3 ausgebildet wird.

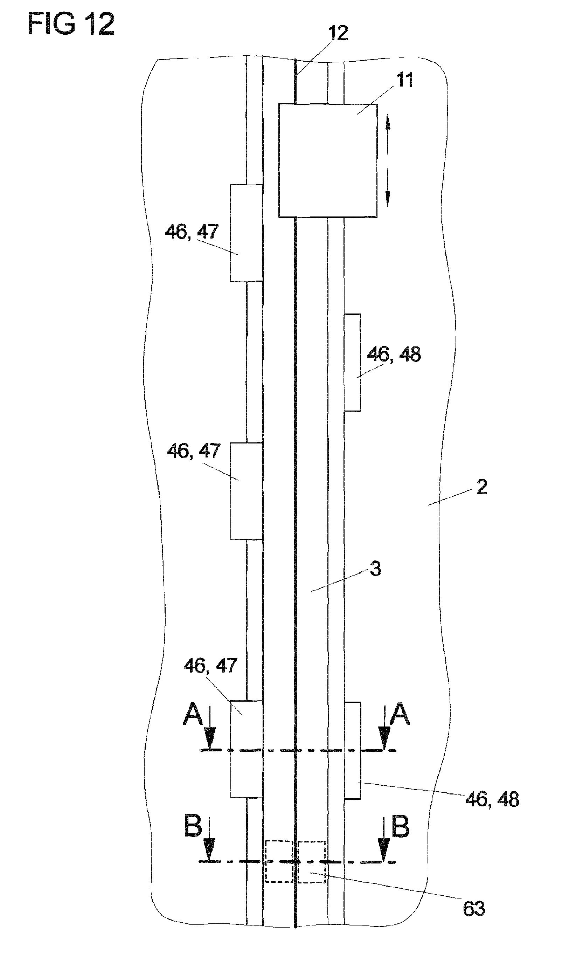

Fig. 12 zeigt eine Draufsicht auf ein beispielsweise als Funktionsträger aus einem Kunststoff ausgebildetes Trägerelement 2 und eine mit dem Trägerelement 2 verspannte, extrudierte Kunststoff-Führungsschiene 3, die über Befestigungsaufnahmen 46 mit dem Trägerelement 2 verspannt ist, wobei mindestens eine Abstützstelle 63 zusätzlich formgebend auf die Krümmung und/oder Verdrillung der Führungsschiene 3 wirkt. Ein Mitnehmer oder Schienengleiter 11 ist entlang der Führungsschiene 3 in Richtung des an den Mitnehmer 11 eingetragenen Doppelpfeils 2 verstellbar, so dass eine mit dem Mitnehmer 11 verbundene Fensterscheibe auf- und abwärts bewegt wird. Zu diesem Zweck ist der Mitnehmer 11 über ein Seil 12 mit einem Fensterheberantrieb verbunden.

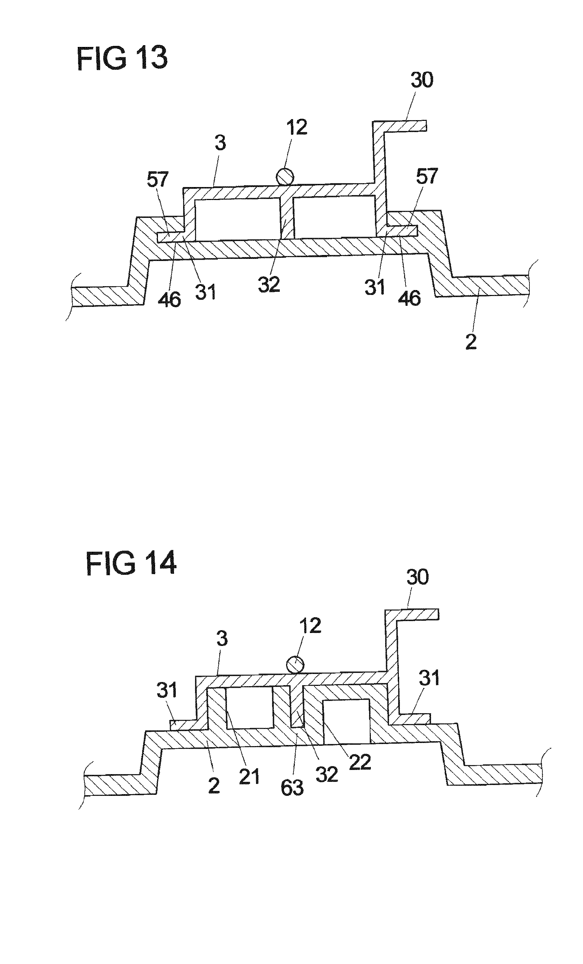

Die Verbindung der Führungsschiene 3 mit dem Trägerelement 2 an den Befestigungsaufnahmen 46 wird anhand eines Querschnitts entlang der Linie A - A gemäß Fig. 12 für verschiedene, in den Fig. 13 und 15 bis 18 dargestellte Ausführungsbeispiele und die formgebende Abstützung der Führungsschiene 3 am Trägerelement 2 über die Abstützstelle 63 anhand eines Schnitts entlang der Linie B - B gemäß Fig. 12 in einem in Fig. 14 dargestellten Ausführungsbeispiel erläutert.

In dem Ausführungsbeispiel gemäß Fig. 13 wird die Verbindung der Führungsschiene 3 mit dem Trägerelement 2 und damit die Biegung bzw. Verdrillung der Führungsschiene 3 durch eine als geschlitztes Kastenprofil ausgebildete Befestigungsaufnahme 46 und durch Befestigungsstellen 57 an den abgewinkelten Seitenschenkeln 31 der Führungsschiene 3 hergestellt, die in das geschlitzte Kastenprofil der Befestigungsaufnahmen 46 eingreifen. Die Verbindung zwischen der Führungsschiene 3 und dem Trägerelement 2 wird durch Einstecken der Führungsschiene 3 mit den abgewinkelten Seitenschenkeln 31 in die Befestigungsaufnahmen 46 des Trägerelements 2 hergestellt.

Ein mittlerer Steg 32 der Führungsschiene 3, der sich an der Oberfläche des Trägerelements 2 abstützt, dient der Stabilisierung der extrudierten Kunststoff-Führungsschiene 3, entlang der das im Schnitt dargestellte Seil 12 geführt ist und die einen abgewinkelten Schienenabschnitt 30 aufweist, an dem der Mitnehmer 11 gemäß Fig. 12 geführt wird.

Die in Fig. 14 entlang des Schnitts B - B gemäß Fig. 12 dargestellte Abstützstelle 63 ist als Abstützbereich ausgebildet, der durch senkrecht von der Oberfläche des Trägerelements 2 abstehende Schenkel 21 bzw. kastenförmige Ausformungen 22 gebildet wird, wobei der Steg 32 der Führungsschiene 3 in einen zwischen dem einen Schenkel 21 und der kastenförmigen Ausformung 22 gebildeten Schlitz eingreift.

Durch die Schenkel 21 und die kastenförmige Ausformung 22 werden Stützbereiche am Trägerelement 2 geschaffen, die die Stabilität der Führungsschiene 3 erhöhen.

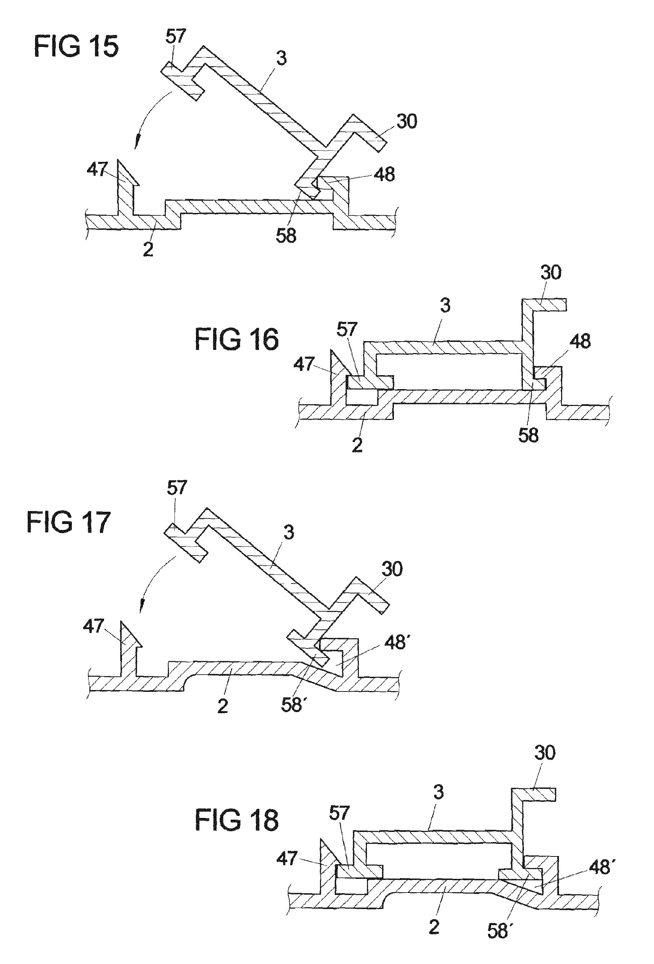

In einer zweiten, in den Fig. 15 bis 18 dargestellten Ausführungsform wird die Führungsschiene 3 in die eine als Hinterschnitt ausgebildete Befestigungsaufnahme 48 des Trägerelements 2 eingesteckt und in eine zweite, als senkrecht von der Oberfläche des Trägerelements 2 abstehender Clips ausgebildete Befestigungsaufnahme 47 eingeclipst. Die Fig. 15 bis 18 zeigen die Führungsschiene 3 jeweils vor und nach dem Einclipsen in die Befestigungsaufnahmen des Trägerelements 2 ebenfalls in einem Schnitt entlang der Linie A - A gemäß Fig. 12.

Die mit den Befestigungsaufnahmen 47 und 48 des Trägerelements 2 zusammenwirkenden Befestigungsstellen 57 und 58 der Führungsschiene 3 sind als abgewinkelte Schenkel ausgebildet, von denen die mit dem Hinterschnitt 48 zusammenwirkende Befestigungsstelle 58 der Führungsschiene 3 in die hakenförmige Öffnung des Hinterschnitts 48 eingesteckt und die Führungsschiene 3 um diese formschlüssige Verbindung entsprechend dem in Fig. 15 eingetragenen Pfeil verschwenkt wird bis die andere Befestigungsstelle 57 der Führungsschiene 3 in die als Clips ausgebildete Befestigungsaufnahme 47 des Trägerelements 2 gemäß Fig. 16 eingeclipst ist.

Die in den Fig. 17 und 18 dargestellte Ausführungsform unterscheidet sich gegenüber der in den Fig. 15 und 16 dargestellten Ausführungsform dahingehend, dass der die eine Befestigungsaufnahme ausbildende Hinterschnitt 48' eine zusätzliche Aussparung aufweist, die eine Verlängerung des abgewinkelten Steges 58' der Führungsschiene 3 und damit eine höhere Stabilität der Verbindung der Führungsschiene 3 mit dem Trägerelement 2 ermöglicht.

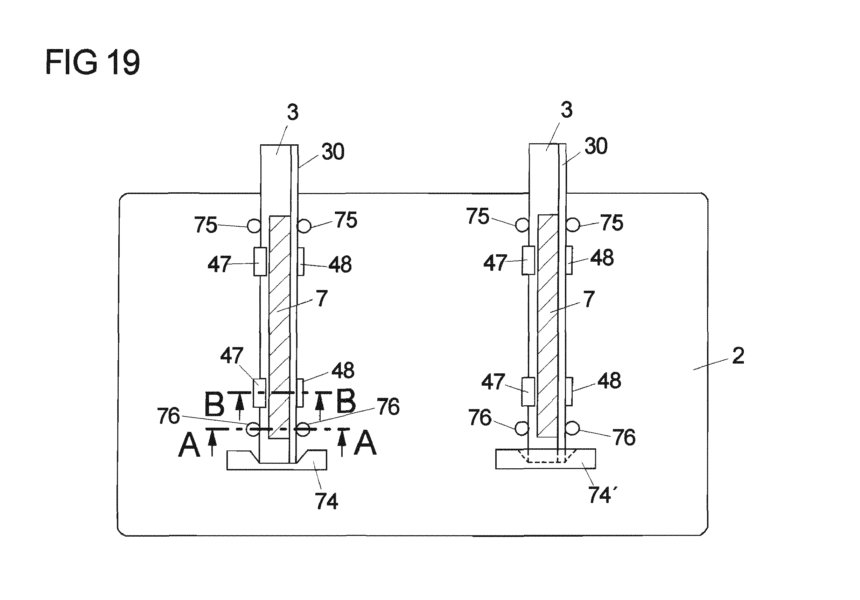

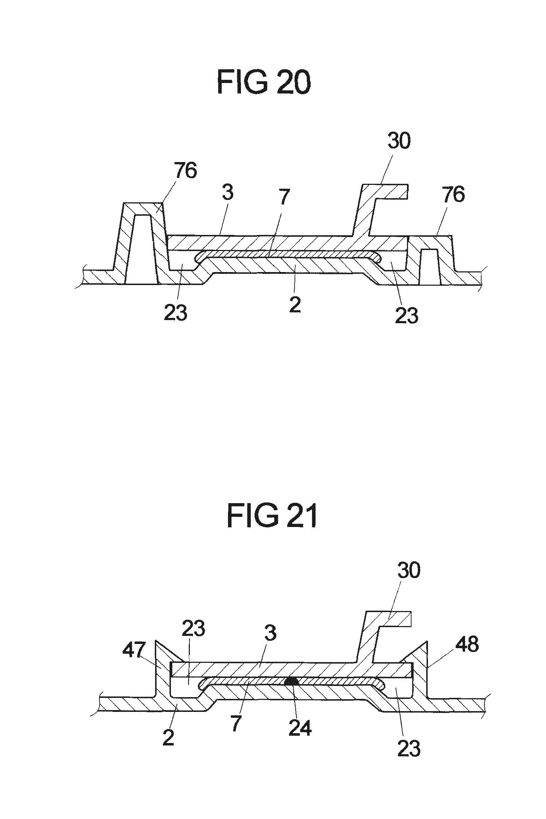

Fig. 19 zeigt eine Draufsicht auf ein Trägerelement 2, das beispielsweise als Funktionsträger ausgebildet ist und beim Einbau in eine Fahrzeugtür eine Türöffnung abdeckt. Auf dem Trägerelement 2 sind zwei Führungsschienen 3 mit an die Führungsschienen 3 angeformten Gleit- und Führungsschenkeln 30 zur Führung eines entlang der Führungsschiene 3 verstellbaren Mitnehmers montiert, die in vorstehend beschriebener Weise zur Biegung und/oder Verdrillung der Führungsschienen 3 mit dem Trägerelement 2 verspannt werden. Die Führungsschienen 3 bestehen beispielsweise aus einer extrudierten Kunststoffschiene oder einer rollierten Stahl- bzw. Aluminiumschiene. Zur Montage und Fixierung der Führungsschienen 3 dienen am Trägerelement ausgebildete untere Anschläge 74, 74', von denen der eine Anschlag als Einstecktasche 74' ausgebildet ist. Als Montagehilfe und zur Ausrichtung der Führungsschienen 3 am Trägerelement 2 dienen obere und untere Seitenanschläge 75, 76, von denen die unteren Seitenanschläge 76 in einem Schnitt entlang der Linie A - A in Fig. 20 im Querschnitt dargestellt sind.

Bei diesem Ausführungsbeispiel der erfindungsgemäßen Lösung wird die Verbindung zwischen der Führungsschiene 3 und dem Trägerelement 2 durch einen Klebstoff 7 hergestellt, der großflächig auf die Führungsschienen 3 und/oder das Trägerelement 2 aufgetragen wird. Um die Führungsschienen 3 bis zum Aushärten des Klebstoffs 7 in entsprechend an das Trägerelement 2 angedrückter Position zu fixieren, dienen mehrere entlang der Führungsschiene 3 auf dem Trägerelement 2 angeordnete Clipse 47, 48, die in einem Schnitt entlang der Linie B - B in Fig. 21 im Querschnitt dargestellt sind.

Fig. 20 zeigt in dem Schnitt entlang der Linie A - A gemäß Fig. 19 die untere Montagehilfe zum Ausrichten der Führungsschiene 3 auf dem Trägerelement 2, die aus kastenförmigen Erhebungen oder Dome 76 des Trägerelements 2 besteht, die um die Breite der Führungsschiene 3 zueinander beabstandet sind, so dass die Seitenkanten der Führungsschiene 3 an den kastenförmigen Erhebungen 76 anliegen. Die Verbindung der Führungsschiene 3 mit dem Trägerelement 2 wird durch einen Klebstoff 7 hergestellt, der großflächig auf die der Unterseite der Führungsschiene 3 zugewandte Oberfläche des Trägerelements 2 zwischen den kastenförmigen Erhebungen oder Domen 76 aufgetragen ist. Überschüssiger Klebstoff 7 kann in zwischen der Oberfläche des Trägerelements 2 und den kastenförmigen Erhebungen 76 ausgebildete Kammern 23 abfließen.

Fig. 21 zeigt in einem Schnitt entlang der Linie B - B gemäß Fig. 19 das Fixieren der Führungsschiene 3 an dem Trägerelement 2 mittels seitlich der Seitenkanten der Führungsschiene 3 angeordneter Clipse 47, 48, die im eingeclipsten Zustand der Führungsschiene 3 die Seitenränder der Führungsschiene 3 umklammern und die Führungsschiene 3 bis zum Aushärten des Klebstoffs 7 fixieren. Um eine definierte Schichtdicke des Klebstoffs 7 zu gewährleisten, weist die der Unterseite der Führungsschiene 3 zugewandte Oberfläche des Trägerelements 2 einen Abstandshalter 24 auf, der beim Aufclipsen der Führungsschiene 3 auf das Trägerelement 2 einen hinreichenden Abstand zwischen der Unterseite der Führungsschiene 3 und der Oberseite des Trägerelement 2 gewährleistet, in dem der Klebstoff 7 wirksam ist. Auch im Bereich der Clipse 47, 48 befinden sich seitliche Kammern 23, in die überschüssiger Klebstoff 7 abfließen kann.

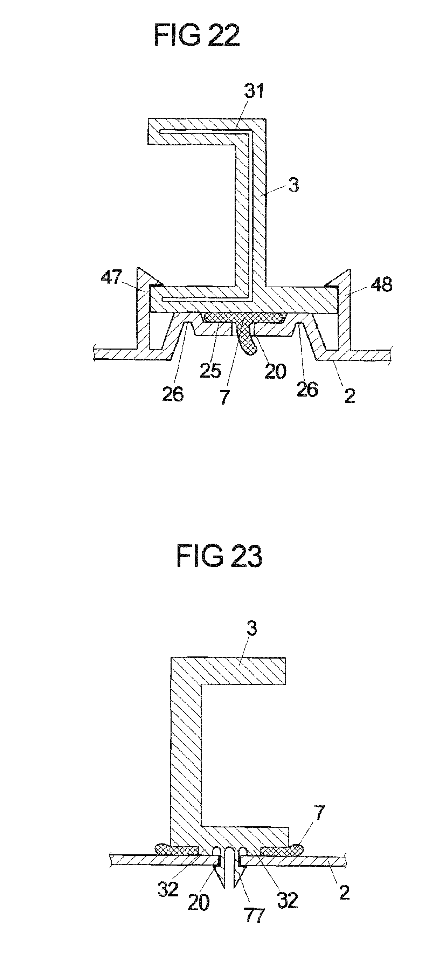

Fig. 22 zeigt eine Abwandlung der Ausführungsform gemäß Fig. 21, bei der in die extrudierte Kunststoff-Führungsschiene 3 ein extrudiertes Vlies, Gewebe, Papier oder eine Folie 31 zur Steifigkeitsverbesserung der Führungsschiene 3 mittels Sandwichbauweise in die Führungsschiene 3 eingefügt ist und vorzugsweise zusammen mit der Führungsschiene 3 extrudiert wird. Als Befestigungsstelle zur Verbindung der Führungsschiene 3 mit dem Trägerelement 2 dient ein Klebstoff 7, wobei zur Fixierung der Führungsschiene 3 auf dem Trägerelement 2 bis zur Aushärtung des Klebstoffs 7 Clipse 47, 48 angeordnet sind, die die Seitenkanten der Führungsschiene 3 umklammern, wenn diese in das Trägerelement 2 eingeclipst ist.

Zur Aufnahme des Klebstoffs 7 weist das Trägerelement 2 zwischen den Clipsen 47, 48 eine napfartige Vertiefung 25 auf, die durch seitliche Dome oder Erhebungen 26 begrenzt ist, die als Abstandhalter zur Gewährleistung einer vorgegebenen Schichtdicke des Klebstoffs 7 dienen. In dieser Ausführungsform kann überschüssiger Klebstoff 7 über eine Öffnung 20 der napfartigen Vertiefung 25 abfließen.

In Fig. 23 ist eine Variante dargestellt, bei der die Verbindung der Führungsschiene 3 mit dem Trägerelement 2 ebenfalls über einen Klebstoff 7 erfolgt, wobei in dieser Ausführungsform ein von der mit dem Trägerelement 2 zu verbindenden Unterseite der Führungsschiene 3 abstehender Clips 77 zur Befestigung der Führungsschiene am Trägerelement bis zur Aushärtung des Klebstoffs 7 vorgesehen ist, der durch eine Öffnung 20 des Trägerelements 2 gesteckt wird und die Führungsschiene 3 in einem definierten Abstand zur Oberfläche des Trägerelements 2 fixiert, wobei zwei seitlich des Clips 77 an der Unterseite der Führungsschiene 3 angeordnete und sich an der Oberfläche des Trägerelements 2 abstützende Stege 32 als Abstandshalter für eine definierte Schichtdicke des Klebstoffs 7 vorgesehen sind, der in dieser Ausführungsform gleichzeitig zur Abdichtung der Verbindung der Führungsschiene 3 mit dem Trägerelement 2 dient.

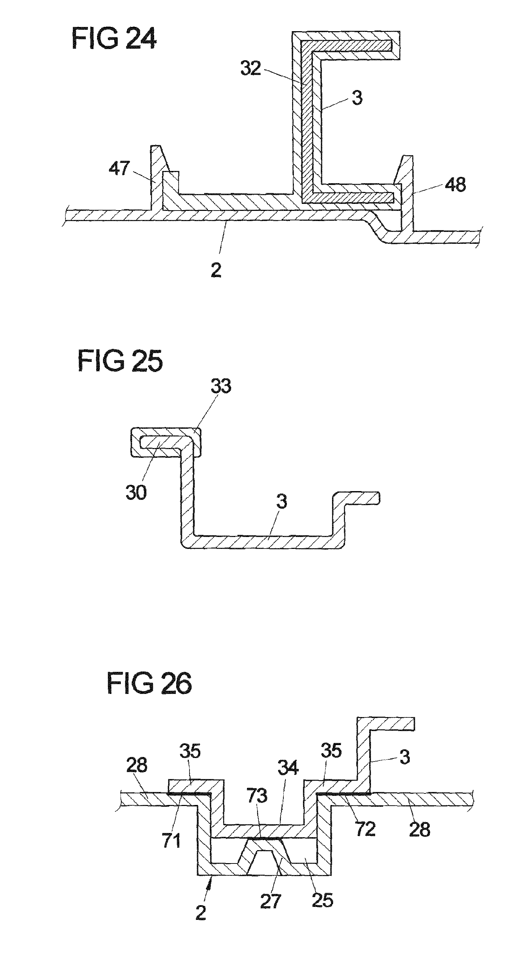

Fig. 24 zeigt in einem Querschnitt durch die Verbindung einer Führungsschiene 3 mit einem Trägerelement 2 eine Abwandlung der Ausführungsform gemäß Fig. 22, bei der in die extrudierte Führungsschiene 3 ein Einleger 32 zur Erhöhung der Steifigkeit bzw. Festigkeit durch Mehrkomponentenbauweise in die Führungsschiene 3 eingefügt ist. Der Einleger 32 kann aus einem Aluminium- oder Kunststoffprofil bestehen, wobei bei Verwendung eines Kunststoff-Einlegers bevorzugt von der 2K-Technik Gebrauch gemacht wird. In dieser Ausführungsform wird die Verbindung der Führungsschiene 3 mit dem Trägerelement 2 auf das Einclipsen der Führungsschiene 3 in von der Oberfläche des Trägerelements 2 abstehende Clipse 47, 48 ohne Verwendung eines Klebstoffs beschränkt.

Fig. 25 zeigt einen Querschnitt durch eine extrudierte Führungsschiene 3, die in Mehrkomponententechnik durch Koextrusion hergestellt wurde, wobei ein erster Kunststoff die Steifigkeit der extrudierten Führungsschiene 3 bestimmt, während ein um den Führungsschenkel 30 zur Führung eines Mitnehmers extrudierter zweiter Kunststoff 33 die Gleiteigenschaften optimiert.

Die in Fig. 26 dargestellte Ausführungsform zeigt einen Schnitt durch ein Trägerelement 2 mit einer napfartigen Vertiefung 25 mit einem mittigen, in Längsrichtung des Trägerelements verlaufenden trapezförmigen Dom 27 und eine Führungsschiene 3 mit einer napfförmigen Vertiefung 34, von der Seitenschenkel 35 abstehen, die bündig auf seitlich der napfartige Vertiefung 25 des Trägerelements 2 abstehende Schenkel 28 des Trägerelements 2 aufliegen, während die napfförmige Vertiefung 34 der Führungsschiene 3 auf dem trapezförmigen Dom 27 des Trägerelements 2 aufliegt. An den Kontaktflächen der Seitenschenkel 35 der Führungsschiene 3 mit den Schenkeln 28 des Trägerelements 2 sind Klebstoffschichten 71, 72 und an der Kontaktfläche der Unterseite der napfförmigen Vertiefung 34 der Führungsschiene 3 mit dem von der napfartigen Vertiefung 25 des Trägerelements 2 abstehenden trapezförmigen Dom 27 ist eine Klebstoffschicht 73 aufgebracht, die eine kompakte, feste Verbindung zwischen dem Trägerelement 2 und der Führungsschiene 3 bewirken, wobei analog zu der Ausführungsform gemäß den Fig. 13 und 14 durch die Schaffung von Hohlräumen der geschlossenen Profile ein hohes Widerstandsmoment der Kombination aus Führungsschiene 3 und Trägerelement 2 mit hoher mechanischer Stabilität erzeugt wird.

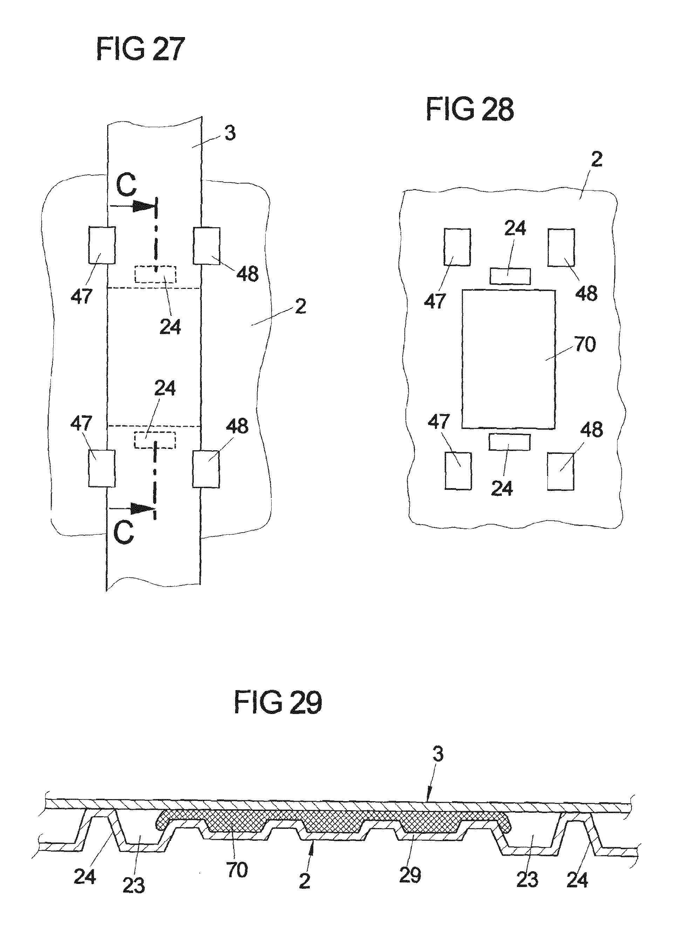

Fig. 27 zeigt eine Draufsicht auf eine mit einem Trägerelement 2 verbundene Führungsschiene 3, die oberhalb und unterhalb sowie zu beiden Seiten einer Klebstofffläche 70 bis zum Aushärten des Klebstoffs an dem Trägerelement 2 mit mehreren entlang der Führungsschiene 3 auf dem Trägerelement 2 angeordneter Clipse 47, 48 analog zur Ausführungsform gemäß den Fig. 19 bis 24 fixiert wird. Oberhalb und unterhalb der Klebstofffläche 70 sind Abstandshalter 24 angeordnet, die beim Aufclipsen der Führungsschiene 3 auf das Trägerelement 2 einen hinreichenden Abstand zwischen der Unterseite der Führungsschiene 3 und der Oberseite des Trägerelement 2 gewährleisten, in dem der Klebstoff wirksam ist. Zur Erhöhung der Stabilität des Trägerelements 2 und optimalen Klebstoffaufnahme weist das Trägerelement 2 zwischen den Abstandshaltern 24 eine strukturierten Oberfläche 29 auf, an deren Enden sich Kammern 23 anschließen, in die überschüssiger Klebstoff abfließen kann.

Fig. 28 zeigt in einer Draufsicht auf das Trägerelement 2 bei weggelassener Führungsschiene 3 die Klebstofffläche 70 mit oberhalb und unterhalb der Klebstofffläche 70 angeordneten Abstandshaltern 24 sowie oberhalb und unterhalb sowie seitlich der Klebstofffläche 70 angeordneten Clipsen 47, 48 zum Fixieren der Führungsschiene 3 bis zum Aushärten des Klebstoffs.

Fig. 29 zeigt in einem Schnitt entlang der Linie C - C gemäß Fig. 27 einen Längsschnitt durch den Verbindungsbereich der Führungsschiene 3 mit dem Trägerelement 2. Die strukturierte Oberfläche 29 besteht aus abwechselnden Vertiefungen und Erhebungen und wird in Längserstreckung der Führungsschiene 3 beidseitig durch die Abstandshalter 24 begrenzt, die eine definierte Dicke des Klebstoffs gewährleisten. Die in dieser Ausführungsform geradlinige, vorzugsweise extrudierte Führungsschiene 3 wird nach dem Auftragen des Klebstoffs 7 auf die Abstandshalter 24 aufgelegt und mit den Clipsen 47, 48 fixiert bis der auf die Klebstofffläche 70 aufgetragene Klebstoff ausgehärtet ist.

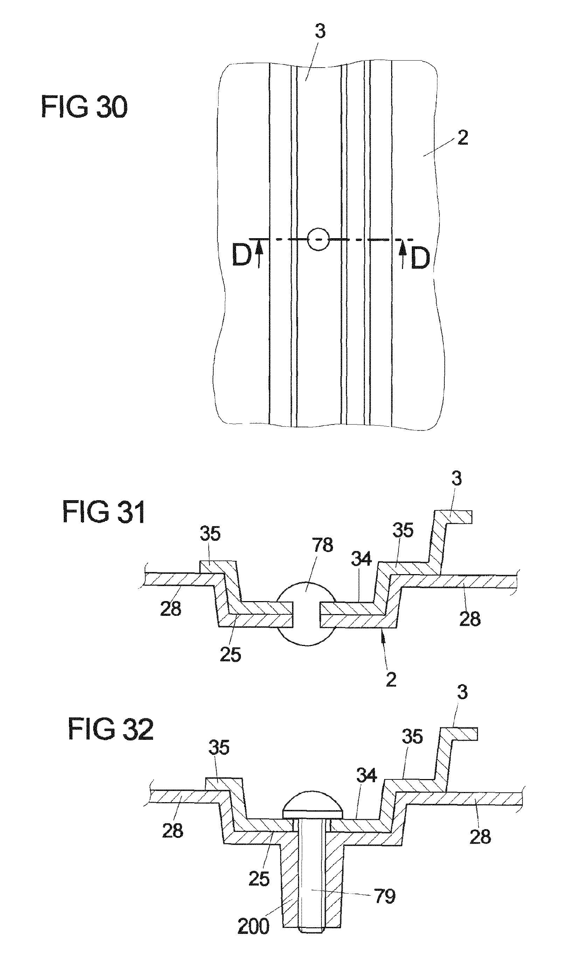

Fig. 30 zeigt eine Draufsicht auf die Verbindung einer Führungsschiene 3 mit einem Trägerelement 2, die in den Fig. 31 und 32 in zwei verschiedenen Ausführungsformen in einem Schnitt entlang der Linie D - D gemäß Fig. 30 dargestellt ist.

In den beiden in den Fig. 31 und 32 dargestellten Ausführungsformen weist das Trägerelement 2 analog zur Ausführungsform gemäß Fig. 26 eine rechteck- oder trapezförmige Vertiefung 25 mit vom Rand der Vertiefung waagerecht abgewinkelten Schenkeln 28 auf, an die eine rechteck- oder trapezförmige Vertiefung 34 der Führungsschiene 3 angepasst ist, die mit ihren vom Rand der Vertiefung waagerecht abgewinkelten Seitenschenkeln 35 auf den von der rechteck- oder trapezförmige Vertiefung 25 abgewinkelten Schenkeln 28 des Trägerelements 2 aufliegt. Die Verbindung zwischen der Führungsschiene 3 und dem Trägerelement 2 wird in der Ausführungsform gemäß Fig. 31 durch einen Niet 78 und in der Ausführungsform gemäß Fig. 32 durch eine Schraube 79 am Boden der rechteck- oder trapezförmige Vertiefungen 25, 34 des Trägerelements 2 und der Führungsschiene 3 hergestellt. Bei der Schraubverbindung steht vom Boden der rechteck- oder trapezförmige Vertiefung 25 des Trägerelements 2 eine domartige Ausstülpung 200 zur Bereitstellung einer ausreichenden Länge für das Gewinde der Schraube 79 ab.

Auch bei diesen Ausführungsformen wird durch das Ineinandergreifen der Abkantungen des Trägerelements 2 und der Führungsschiene 3 ein geschlossenes Profil mit einem hohen Widerstandsmoment und damit einer hohen mechanischen Stabilität zur Verbesserung der Steifigkeit der Führungsschiene 3 geschaffen. Beim Trägerelement 2 handelt es sich beispielsweise um einen Stahl- oder Aluminium-Funktionsträger, während die Führungsschiene 3 als extrudierte Kunststoffschiene oder rollierte Stahl- oder Aluminiumschiene ausgebildet ist.

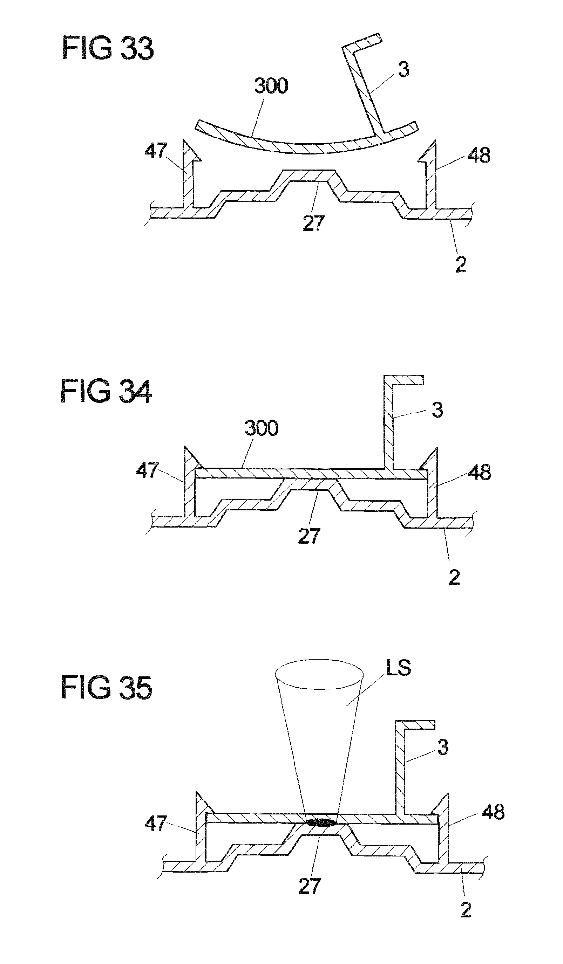

Die in den Fig. 33 bis 35 dargestellte Ausführungsform knüpft an die Ausführungsform der Fig. 20 bis 22 und 26 sowie der Fig. 31 und 32 an. Das Trägerelement 2 weist eine abgestufte, domförmige Erhebung 27 mit einem zentralen Auflagebereich und zwei seitlichen Clipsen 47, 48 auf, während die Führu2ngsschiene 3 eine vorgebogene Grundfläche 300 enthält, von der der Führungsbereich der Führungsschiene 3 abgewinkelt ist. Durch Einclipsen der gebogenen Grundfläche 300 der Führungsschiene 3 in den Aufnahmebereich des Trägerelements 2 wird die gebogene Grundfläche 300 der Führungsschiene 3 gemäß Fig. 34 begradigt, durch die Clipse 47, 48 aber derart fixiert, dass die zuvor gebogene Grundfläche 300 der Führungsschiene 3 im Bereich der Auflagefläche unter Vorspannung auf der abgestuften, domförmigen Erhebung 27 des Trägerelements 2 aufliegt. Durch Laserschweißen mittels eines Laserstrahls LS wird gemäß Fig. 35z wischen der Grundfläche 300 der Führungsschiene 3 und der abgestuften, domförmigen Erhebung 27 des Trägerelements 2 die Führungsschiene 3 am Trägerelement 2 befestigt.

Die Führungsschiene 3 ist in dieser Ausführungsform als extrudierte Kunststoffschiene mit einem für Laserstrahlung durchlässigen oder transmittierenden Werkstoff ausgebildet. Das Trägerelement 2 besteht vorzugsweise ebenfalls aus Kunststoff mit einem die Laserstrahlung absorbierenden Werkstoff.

Die erfindungsgemäße Lösung der Verdrillung bzw. Biegung einer Führungsschiene zur Stabilitätserhöhung und Schaffung eines vorgebbaren Abzugs einer Fensterscheibe kann auch unter Einbeziehung weiterer Elemente eines Fensterhebers realisiert werden, wobei diese Elemente nur der Verdrillung bzw. Biegung der Führungsschiene, nur der Stabilitäts- und Steifigkeitserhöhung der Führungsschiene und/oder des Trägerelements oder sowohl der Verdrillung bzw. Biegung der Führungsschiene als auch der Stabilitäts- und Steifigkeitserhöhung dienen können.

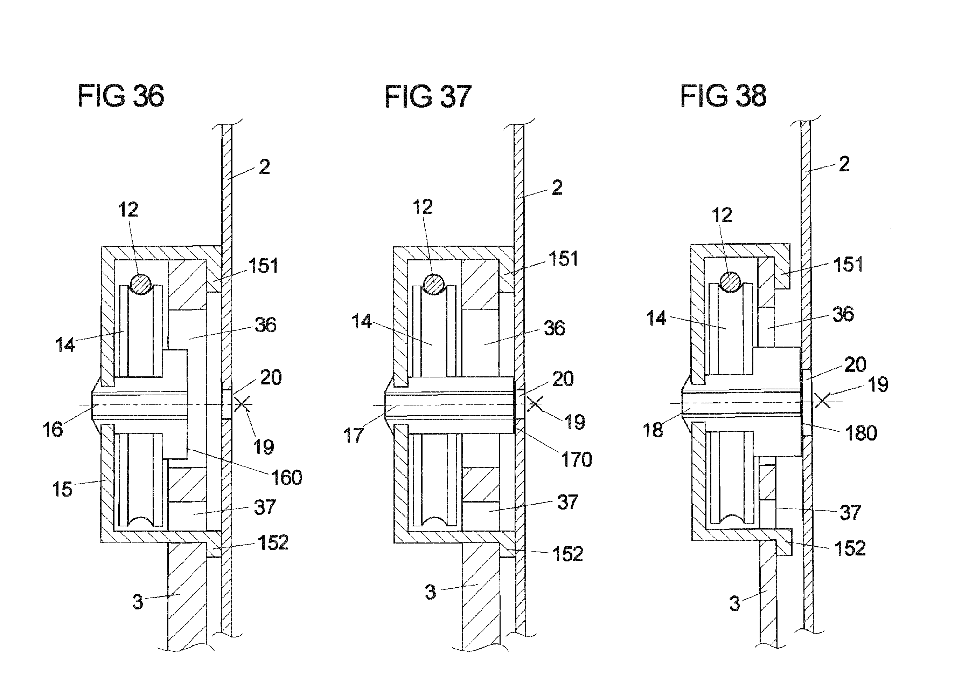

In den Fig. 36 bis 38 sind drei Ausführungsbeispiele dargestellt, bei denen ein Seilrollenhalter bzw. eine ein Fensterheberseil umlenkende Seilrolle 14 aufnehmende Kassette 15 eines Seilfensterhebers in die Verbindung einer Führungsschiene 3 mit einem Trägerelement 2, beispielsweise einem Türinnenblech oder einer Trägerplatte bzw. einem Funktionsträger, integriert wird.

In den in den Fig. 36 und 37 dargestellten Ausführungsbeispielen erfolgt die Abstützung der Führungsschiene 3 über die die Seilrolle 14 aufnehmende Kassette 15. Die Kassette 15 weist zwei Auflageflächen 151, 152 auf, die einen Hintergriff der Kassette 15 an der Führungsschiene 3 ausbilden und zum einen den oberen Rand der Führungsschiene 3 umgreifen und zum anderen durch eine Öffnung 37 der Führungsschiene gesteckt werden und mit denen die Kassette 15 auf die Führungsschiene 3 aufgesteckt wird. Durch eine Aussparung 36 in der Führungsschiene 3 wird die Kassette 15 mit der Seilrolle 14 und einem Stufenbolzen mit Innengewinde 16, 17 auf dem die Seilrolle 14 gelagert ist, mit der Kassette 15 verbunden. Die Kassette 15 stützt sich über die beiden Auflageflächen 151, 152 am Trägerelement 2 ab und wird mittels einer durch eine Öffnung 20 des Trägerelements 2 gesteckten Schraube 19, die mit dem Innengewinde des Stufenbolzens 16, 17 verschraubt wird, mit dem Trägerelement 2 verbunden.

In der Ausführungsform gemäß Fig. 36 ist der Boden 160 des Stufenbolzens mit Innengewinde 16 vom Trägerelement 2 beabstandet, während die in den Fig. 37 und 38 dargestellten Ausführungsbeispiele Durchschraublösungen zur Stabilitätserhöhung zeigen, wobei sich in der Ausführungsform gemäß Fig. 37 der Boden 170 des Stufenbolzens mit Innengewinde 17 und die Kassette 15 über die beiden Auflageflächen 151, 152 am Trägerelement 2 abstützen, so dass die Kassette 15 belastet wird, während bei dem in Fig. 38 dargestellten Ausführungsbeispiel eine Entlastung der Kassette 15 bewirkt wird, indem diese lediglich auf die Führungsschiene 3 aufgesteckt wird, sich aber nicht über die Auflageflächen 151, 152 am Trägerelement 2 selbst abstützt.

Die Verbindung der Seilrolle 14, der Kassette 15 und der Führungsschiene 3 mit dem Trägerelement 2 erfolgt in der Ausführungsform gemäß Fig. 38 über einen Stufenbolzen 18, dessen Boden 180 am Trägerelement 2 anliegt und mit einer durch eine Öffnung 20 des Trägerelements 2 gesteckten Schraube 19, die mit dem Innengewinde des Stufenbolzens 18 verschraubt wird, am Trägerelement 2 befestigt wird.

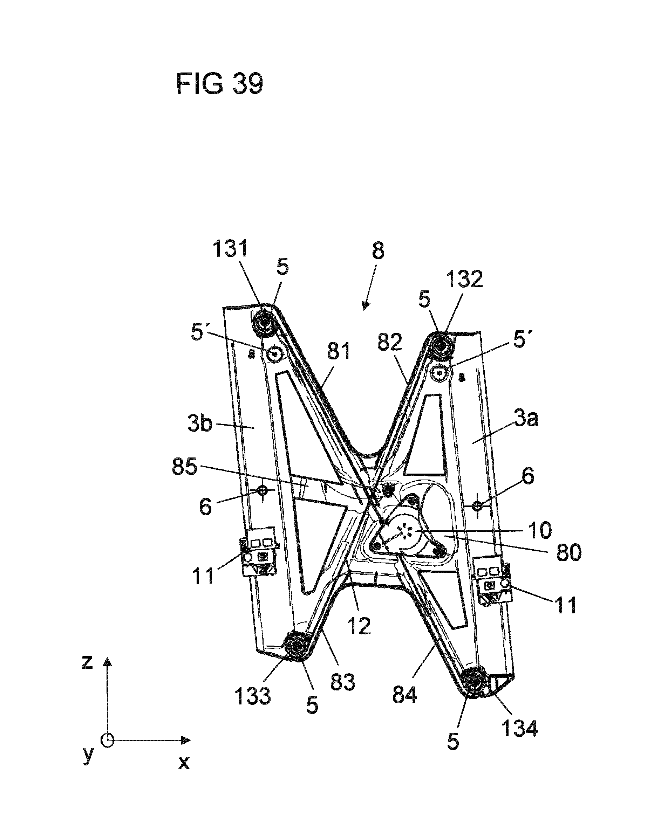

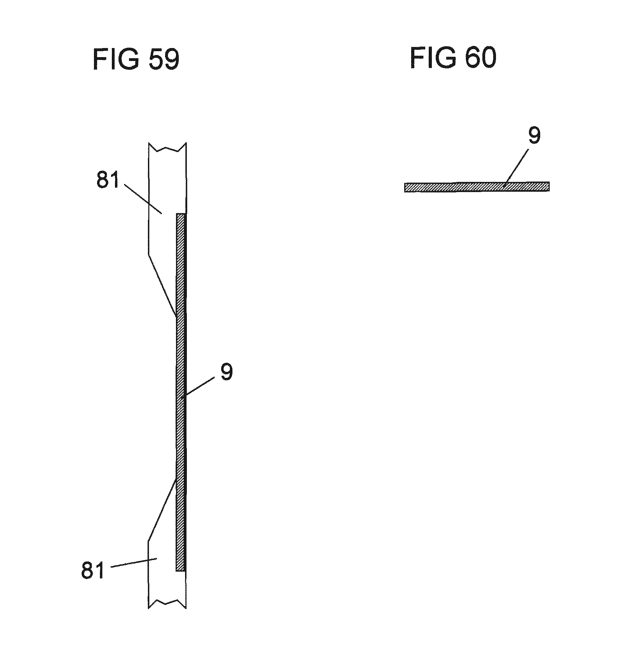

Der vorstehend beschriebene Einbau von Führungsschienen eines Fensterhebers in den Türrohbau einer Fahrzeugtür zur Herstellung einer gebogenen und/oder verdrillten Führungsschiene bei der Verbindung von Befestigungsstellen der Führungsschiene mit Befestigungsaufnahmen an einem Trägerelement, beispielsweise dem Türrohbau einer Fahrzeugtür, einem Aggregateträger oder einer Fensterheber-Grundplatte, sowie Abstützstellen zur Herstellung einer gewünschten Abzugskinematik ist auch auf Aggregateträger bzw. Grundplatten mit integrierten Führungsschienen anwendbar. Die verschiedenen Anwendungen und Einsatzmöglichkeiten sollen nachfolgend anhand der Fig. 39 bis 70 erläutert werden.

Fig. 39 zeigt in Relation zu einem Achsenkreuz mit der Fahrzeuglängsachse oder x-Achse, der senkrecht zur Zeichenebene verlaufenden Fahrzeugquerachse oder y-Achse sowie der Fahrzeughochachse oder z-Achse eine Grundplatte 8 für einen Fensterheber mit den darauf angeordneten Komponenten eines doppelsträngigen Fensterhebers, nämlich einer Antriebseinheit 10 mit einer Seiltrommel zum Antrieb eines Fensterheberseils 12, das über Seil- oder Umlenkrollen 131, 132, 133, 134 geführt und mit zwei auf Führungsschienen 3a, 3b angeordneten und geführten Mitnehmern 11 verbunden ist. Die mit einer Fensterscheibe gekoppelten Mitnehmer 11 werden je nach Antriebsrichtung der Antriebseinheit 10 auf den Führungsschienen 3a, 3b angehoben oder abgesenkt, wodurch die Fensterscheibe eine Fensteröffnung eines Türrahmens öffnet oder schließt.

Die flexiblen Führungsschienen 3a, 3b sind um die Fahrzeuglängsachse oder x-Achse insbesondere biegbar und um die Fahrzeughochachse oder z-Achse verdrillbar ausgebildeten und in die Grundplatte 8 integriert. Dazu weist die Grundplatte 8 einen an die Mitte der einen Führungsschiene 3a angebundenen mittleren Bereich 80 auf, der aus einem starren Material besteht und/oder einen Querschnitt oder eine Querschnittsform mit hohem Widerstandsmoment aufweist. Von dem starren Bereich 80 führen als Diagonalstreben ausgebildete Verbindungsabschnitte 81, 82, 83, 84 zu den oberen und unteren Enden der Führungsschienen 3a, 3b und eine Querstrebe 85 zur Mitte der anderen Führungsschiene 3b. An den oberen und unteren Enden der Führungsschienen 3a, 3b sind Umlenkrollen 131, 132, 133, 134 zur Umlenkung des Fensterheberseils 12 angeordnet, deren Achsen gleichzeitig als Befestigungsstellen 5 zum Verbinden der Grundplatte 8 mit dem Türrohbau dienen können, indem Befestigungsbolzen durch die Achsen der Seil- oder Umlenkrollen 131, 132, 133, 134 gesteckt und mit dem Türrohbau einer Fahrzeugtür verbunden werden.

Alternativ können getrennte Befestigungsstellen 5' in der Verbindung zwischen beispielsweise den oberen Enden der flexiblen Führungsschienen 3a, 3b zu den Diagonalstreben 81, 82 wie in Fig. 39 vorgesehen werden, durch die Befestigungsbolzen gesteckt und mit dem Türrohbau verbunden werden.

Beidseitig des starren Bereichs 80 der Grundplatte 8 sind zwei Abstützpunkte 6 an den flexibel ausgebildeten Führungsschienen 3a, 3b vorgesehen, die alternativ auch als Befestigungspunkte zur Verbindung der Grundplatte 8 mit dem Türrohbau einer Kraftfahrzeugtür genutzt werden können. Der starre Bereich 80 der Grundplatte 8 befindet sich somit zwischen den Abstützpunkten 6 und dient beispielsweise zur Lagerung des Fensterheberantriebs 10.

Abhängig von den Fahrzeugen unterschiedlicher Fahrzeughersteller, von den Fahrzeugtypen und der Ausbildung einer Fahrzeugtür kann die zu verstellende Fensterscheibe eines Fensterhebers unterschiedlich ausgebildet sein. So kann eine Fensterscheibe beispielsweise in Abhängigkeit von der Formgebung einer Fahrzeugtür einen bestimmten Krümmungsradius aufweisen, der bei unterschiedlichen Fahrzeugtüren unterschiedlich sein kann und eine Bewegungsbahn vorgibt, entlang der die Fensterscheibe zum Verstellen in den aus dem Türaußenblech und Türinnenblech gebildeten Türkörper eingefahren bzw. aus diesem herausgefahren wird. Darüber hinaus kann die Bewegungsbahn der Fensterscheiben unterschiedlich ausgebildet sein und beispielsweise nahezu senkrecht oder schräg in den Türkörper eingefahren bzw. aus diesem herausgefahren werden, oder zum Umfahren von Hindernissen im Türkörper bzw. zur bündigen Anlage einer gebogenen, tonnenförmigen Fensterscheibe an der Türdichtung, um die Fahrzeuglängsachse (X-Achse), Fahrzeugquerachse (Y-Achse) oder Fahrzeughochachse (Z-Achse) bzw. in durch die drei Achsen gebildeten Ebenen geschwenkt werden, so dass infolge dieser Vorgaben die die Bewegungsbahn der Fensterscheiben bestimmenden Führungsschienen in ihrer Längserstreckung entsprechend gebogen oder verdrillt sein müssen.

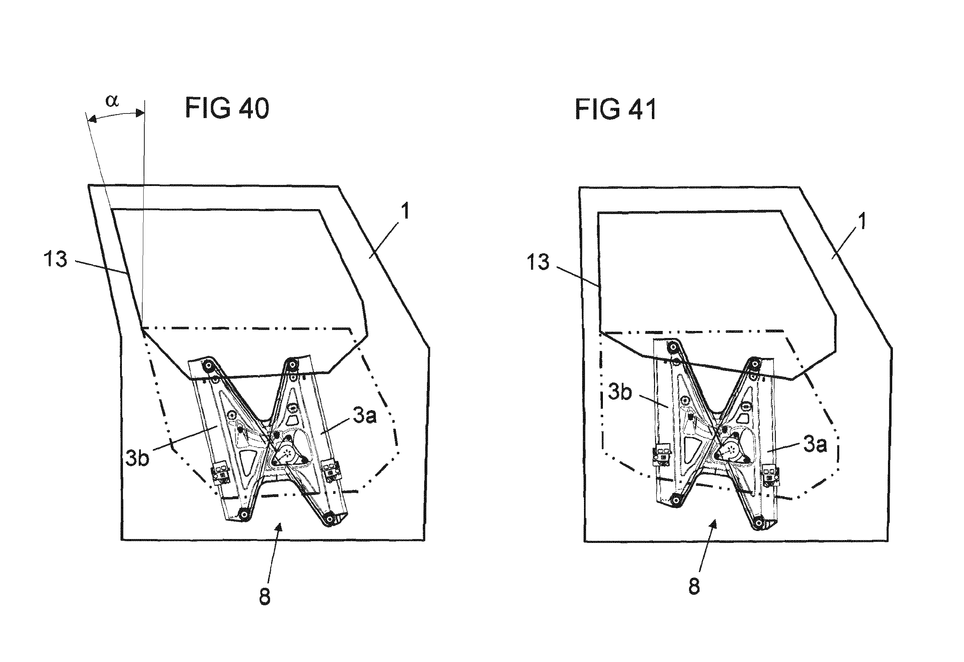

In den Fig. 40 und 41 ist eine schematische Ansicht einer Fahrzeugtür 1 dargestellt, in deren Türrohbau eine Grundplatte 8 gemäß Fig. 39 zur Realisierung verschiedener Abzugswinkel α einer Fensterscheibe 13 eines Fensterhebers eingebaut ist. Dabei wird die Grundplatte 8 je nach erforderlichem Abzugswinkel α der Fensterscheibe in der Fahrzeugtür 1 in die jeweils richtige Lage gedreht, das heißt bei einem schrägen Abzug der Fensterscheibe wird die Grundplatte 8 gemäß Fig. 40 unter einem Abzugswinkel α gegenüber der Fahrzeughochachse oder z-Achse geneigt eingebaut, während bei vertikalem Abzug der Fensterscheibe 13 die Grundplatte 8 gemäß Fig. 41 in vertikaler Ausrichtung der in die Grundplatte integrierten Führungsschienen 3a und 3b mit dem Türrohbau der Fahrzeugtür verbunden wird.

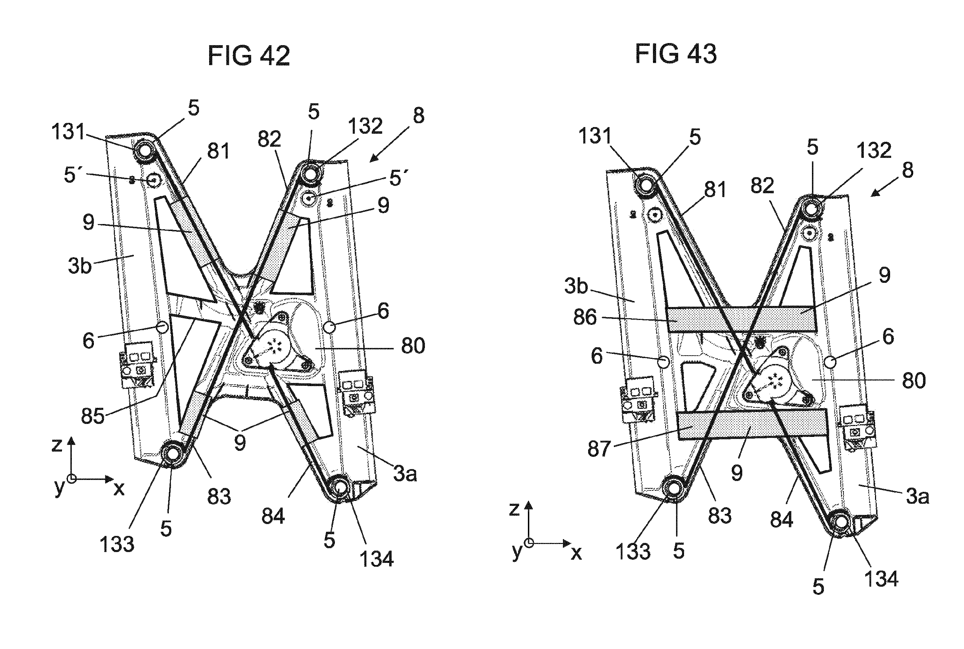

Fig. 42 zeigt in einer schematischen Ansicht die Grundplatte 8 gemäß Fig. 39 mit in die Grundplatte 8 integrierten Führungsschienen 3a, 3b in Relation zu einem Achsenkreuz, wobei bezüglich der verwendeten Bezugsziffern auf die vorstehende Beschreibung der Fig. 39 Bezug genommen wird.

Zum Verbiegen bzw. Verdrillen der Führungsschienen 3a, 3b beim Einbau der Grundplatte 8 in den Türrohbau einer Fahrzeugtür weisen die Diagonalstreben 81 bis 84 flexible Bereiche 9 auf. Während der starre Bereich 80 der Grundplatte 8 im mittleren Bereich der Grundplatte 8 einerseits unmittelbar mit der einen Führungsschiene 3a verbunden ist, erfolgt die Verbindung mit der anderen Führungsschiene 3b über die starre Diagonalstrebe 85, die mit dem mittleren Bereich der Führungsschiene 3b verbunden ist.

In alternativer Ausführungsform zeigt Fig. 43 eine Grundplatte 8 mit integrierten Führungsschienen 3a, 3b, wie in Fig. 42, jedoch mit einer Anordnung flexibler Bereiche an oberhalb und unterhalb des starren mittleren Bereichs verlaufenden Querstreben 86, 87, die die mittleren Bereiche beider Führungsschienen 3a, 3b verbindet.

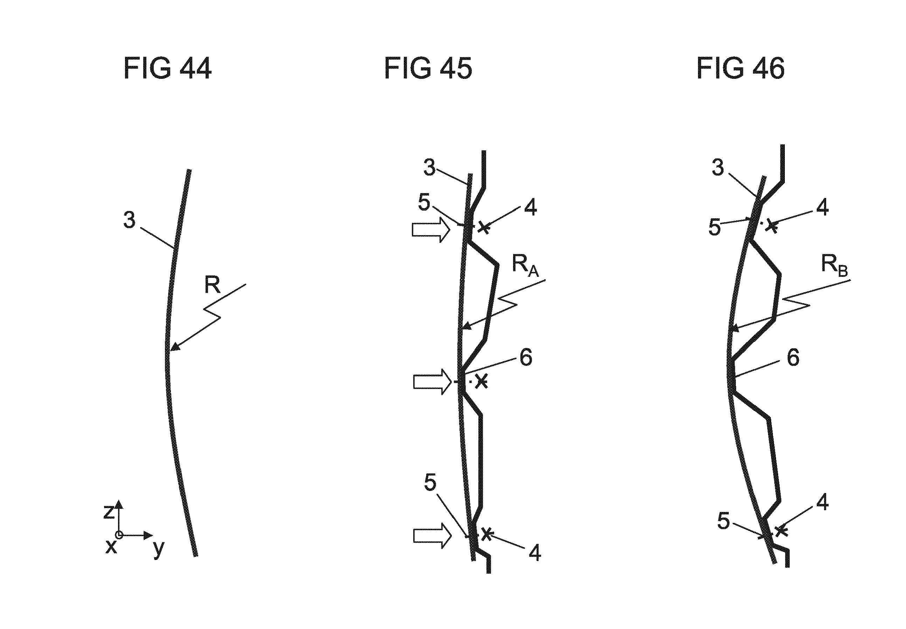

Fig. 44 zeigt einen schematischen Längsschnitt durch eine oder beide in die Grundplatte 8 integrierten Führungsschienen 3 (3a, 3b gemäß den Fig. 42 und 43) im unverspannten Zustand vor dem Einbau in eine Fahrzeugtür in Relation zu einem Achsenkreuz, wobei die Führungsschiene 3 mit einem Radius R vorgebogen ist. Beim Einbau der Grundplatte 8 in eine Fahrzeugtür und Verbindung der Befestigungsstellen 5 mit dem Türrohbau bei Auflage der Abstützstellen 6 auf entsprechende Einbauteile der Fahrzeugtür wird die Führungsschiene 3 in eine Zwangslage gebracht, aus der sich der gewünschte Schienenradius ergibt.

Fig. 45 zeigt die Führungsschiene 3 nach dem Verbinden der Befestigungsstellen 5 mit den Befestigungsaufnahmen 4 des Türrohbaus und Abstützung der Führungsschiene 3 an der Abstützstelle 6, so dass die vorgebogene Führungsschiene 3 auf einen Radius R_{A} "aufgebogen" wird, wobei R_{A}>R ist.

Alternativ kann die Führungsschiene 3 gemäß Fig. 46 beim Einbau der Grundplatte 8 in eine Fahrzeugtür und Befestigung der Befestigungsstellen 5 an entsprechenden Befestigungsaufnahmen 4 des Türrohbaus sowie Abstützung der Führungsschiene 3 an einer Abstützstelle 6 auf einen Radius R_{B} "weitergebogen" werden, das heißt R_{B}<R.

Aus diesen beiden schematischen Darstellungen der Fig. 45 und 46 wird deutlich, dass ein und dieselbe vorgebogene, flexible und in die Grundplatte 8 mit flexiblen Bereichen 9 integrierte Führungsschiene 3 beim Einbau in unterschiedliche Fahrzeugtüren unterschiedliche Konfigurationen einnimmt, wenn die Grundplatte 8 mit dem Türrohbau einer Fahrzeugtür verbunden wird, so dass sich die Grundplatte 8 mit den integrierten Führungsschienen 3 für unterschiedliche Abzugskinematiken und Konfigurationen von Fensterhebern eignet.

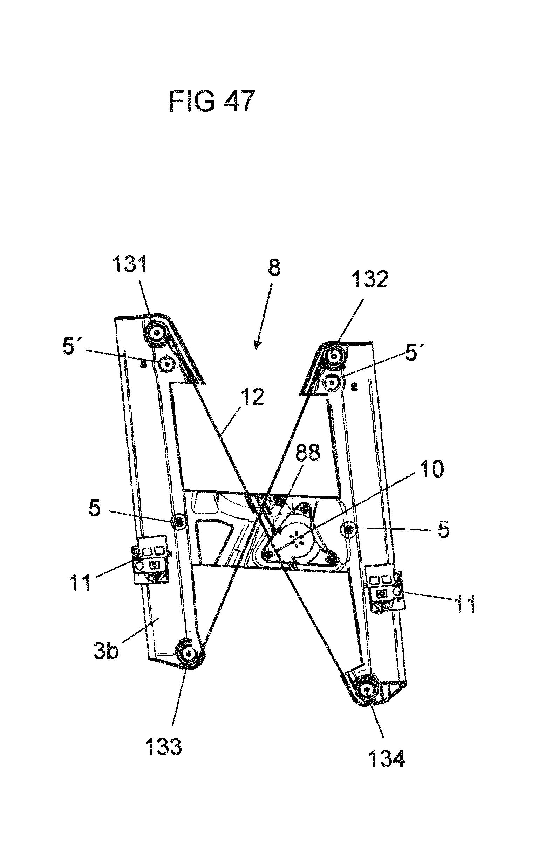

Die in Fig. 47 schematisch dargestellt Variante einer Grundplatte 8' mit integrierten, flexibel ausgebildeten Führungsschienen 3a, 3b, die vorzugsweise biegbar um die Fahrzeuglängsachse oder x-Achse und verdrillbar um die Fahrzeughochachse oder z-Achse sind, weist keine Quer- oder Diagonalstreben wie die vorstehend beschriebene Ausführungsform gemäß den Fig. 42 oder 43 auf, sondern stellt die Flexibilität zum Verwinden der Führungsschienen 3a, 3b zueinander dadurch her, dass nur ein starrer Querträger 88 zwischen den Führungsschienen 3a, 3b vorgesehen ist, der über Befestigungsstellen 5 mit dem Türrohbau einer Fahrzeugtür verbunden wird. Durch den Wegfall der Quer- oder Diagonalstreben entsteht eine Flexibilität der Grundplatte 8, die ein Verwinden der Führungsschienen 3a, 3b zueinander ermöglicht. Zur weiteren Anbindung der Grundplatte 8 an den Türrohbau einer Fahrzeugtür können weitere Befestigungsstellen, wie die Verbindung über die Achsen der Umlenkrollen 131 - 134 oder zusätzlich angeordnete Befestigungsstellen 5' vorgesehen werden.

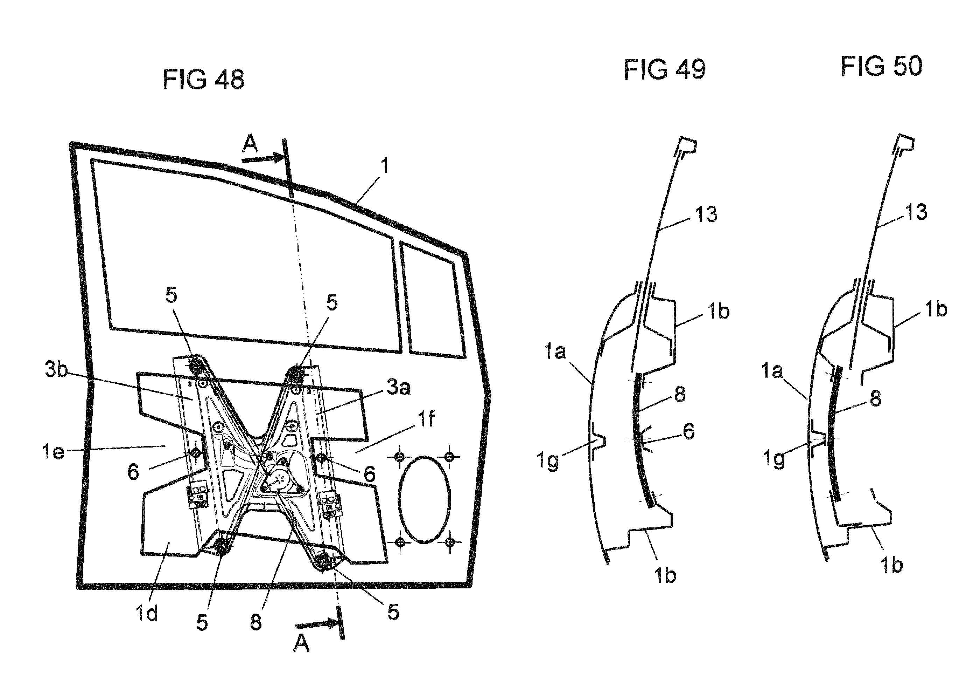

Anhand einer in Fig. 48 dargestellten Seitenansicht einer Fahrzeugtür 1 mit einer im Türrohbau befestigten Grundplatte 8 mit integrierten Führungsschienen 3a, 3b sowie in den Fig. 49 und 50 dargestellten Längsschnitten durch die Fahrzeugtür 1 gemäß Fig. 48 entlang der Schnittlinie A-A soll die Möglichkeit einer Mehrpunktauflage für innen- und außen liegende Fensterheber näher erläutert werden.

Fig. 48 zeigt eine Fahrzeugtür 1 mit einer im Türrohbau vorgesehenen, im Wesentlichen rechteckförmigen Öffnung 1 d, in die zwei seitliche Auskragungen 1 e, 1f hineinragen. Die für einen schrägen Abzug der Fensterscheibe unter einem Abzugswinkel gegenüber der Fahrzeughochachse in den Türrohbau eingebaute Grundplatte 8 ist über Befestigungsstellen 5, die durch die Achsen der Umlenkrollen des Fensterhebers gesteckt sind, mit dem Türrohbau verbunden. Zur Herstellung einer vorgegebenen Biegung oder Verdrillung der in die Grundplatte 8 integrierten Führungsschienen 3a, 3b sind im Bereich der Auskragungen 1 e, 1f Abstützstellen 6 vorgesehen, die ein gezieltes Biegen und/oder Verdrillen der in die Grundplatte 8 integrierten Führungsschienen 3a, 3b ermöglichen.

Bei einem in einem Längsschnitt in Fig. 49 dargestellten innen liegenden Fensterhebersystem ist die Grundplatte 8 über die durch die Umlenkrollen gesteckten Befestigungsmittel mit dem Türinnenblech 1b der Türkarosserie verbunden und wird an den an den Auskragungen 1 e, 1f vorgesehenen Abstützstellen 6 abgestützt, so dass die Führungsschienen eine gebogene und gegebenenfalls verdrillte Form einnehmen, wodurch die Fensterscheibe 13 entlang eines vorgegebenen Abzugsweges verstellt wird.

Bei einem in Fig. 50 in einem Längsschnitt durch die Fahrzeugtür dargestellten außen liegenden Fensterhebersystem wird die Grundplatte 8 an benachbart zur Türaußenhaut 1 a vorgesehenen Teilen des Türrohbaus befestigt und kann sich beispielsweise an einem Seitenaufprallträger 1 g abstützen.

Alternativ zur Abstützung der Grundplatte 8 an Abstützungen der Auskragungen 1 e, 1f kann bei einem innen liegenden Fensterhebersystem ein in Fig. 50 nicht dargestelltes Versteifungselement zur Abstützung der Grundplatte 8 eingesetzt werden, das insbesondere mit dem Türinnenblech verbunden ist.

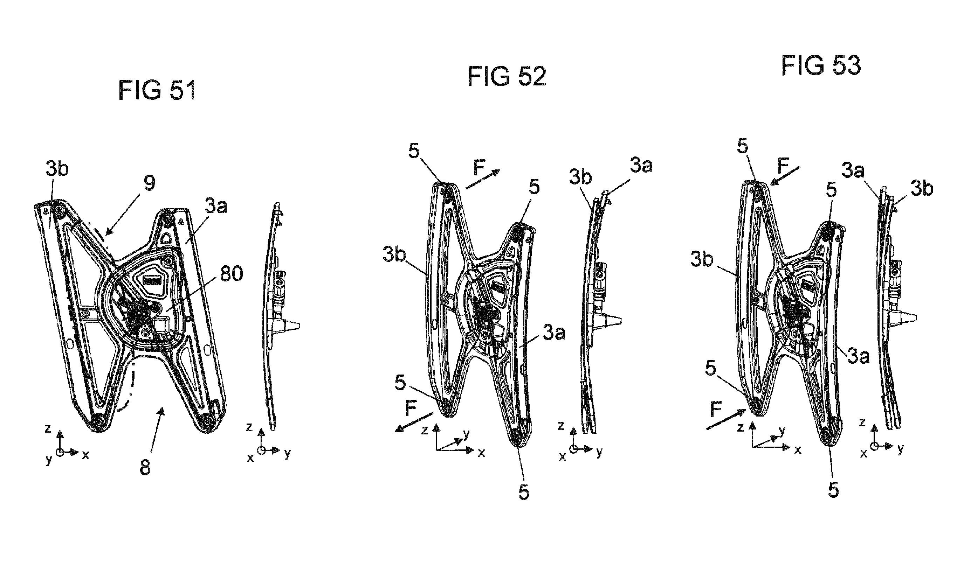

Anhand der Fig. 51 bis 53 soll beschrieben werden, wie eine Führungsschiene durch das Verbinden mit dem Türrohbau einer Fahrzeugtür in eine Zwangslage gebracht und dadurch verdrillt bzw. gekippt wird.

Fig. 51 zeigt in einer Draufsicht und in einer Seitenansicht mit Achsenkreuzen zur Verdeutlichung der Einbaulage eine Grundplatte 8 mit einer in die Grundplatte 8 integrierten Führungsschiene 3a, der so genannten A-Schiene, und einer in die Grundplatte 8 integrierten Führungsschiene 3b, der so genannten B-Schiene, in einer Ausgangssituation. Durch die Anordnung eines flexiblen Bereichs 9 in der Grundplatte 8, beispielsweise durch eine entsprechende Gestaltung des starren Bereichs 80 der Grundplatte 8 und vom starren Bereich 80 abgehenden Diagonalstreben zu dem oberen und unteren Ende sowie zum mittleren Bereich der B-Schiene 3b mit in den Diagonalstreben vorgesehenen flexiblen Bereichen kann die B-Schiene 3b gebogen und/oder verdrillt werden, während die A-Schiene 3a in ihrer in der Ausgangssituation vorliegenden Form mit dem Türrohbau verbunden wird.

Die Seitenansicht der Fig. 51verdeutlicht, dass beide Führungsschienen 3a, 3b in Richtung der Fahrzeuglängsachse oder x-Achse miteinander in der Ausgangssituation fluchten.

Nach dem Verbinden der A-Schiene 3a mit dem Türrohbau an den Befestigungsstellen 5 an der oberen und unteren Umlenkrolle der A-Schiene 3a wird auf die Enden der B-Schiene eine Kraft in Richtung der eingetragenen Pfeile F aufgebracht und die B-Schiene beispielsweise mittels durch die als Befestigungsstellen 5 dienenden Achsen der Umlenkrollen am oberen und unteren Ende der B-Schiene 3b gesteckte Schraubbolzen mit dem Türrohbau verbunden und damit in eine Zwangslage gebracht, in der sie relativ zur A-Schiene 3a verdreht bzw. gekippt ist, wie es die Seitenansicht der Fig. 52 verdeutlicht.

Fig. 53 zeigt, dass die flexible B-Schiene 3b durch eine Umkehr der auf die Enden der B-Schiene 3b wirkenden Kräfte F in entgegen gesetzter Richtung verdreht bzw. gekippt wird, wie dies durch die Seitenansicht der Fig. 53 verdeutlicht wird.

In analoger Anwendung einer vorgebogenen Führungsschiene kann beispielsweise die in Fig. 52 dargestellte Zwangslage der B-Schiene 3b nach dem Verbinden der Befestigungsstellen 5 am Türrohbau einer Fahrzeugtür als Ausgangslage vorliegen, um die B-Schiene 3b nach dem Verbinden der A-Schiene 3a mit dem Türrohbau beim Verbinden der Befestigungsstellen 5 der B-Schiene 3b mit dem Türrohbau weiter aufzubiegen oder zurückzubiegen, so dass die B-Schiene 3b stärker oder geringer relativ zur A-Schiene 3a verdreht bzw. gekippt wird.

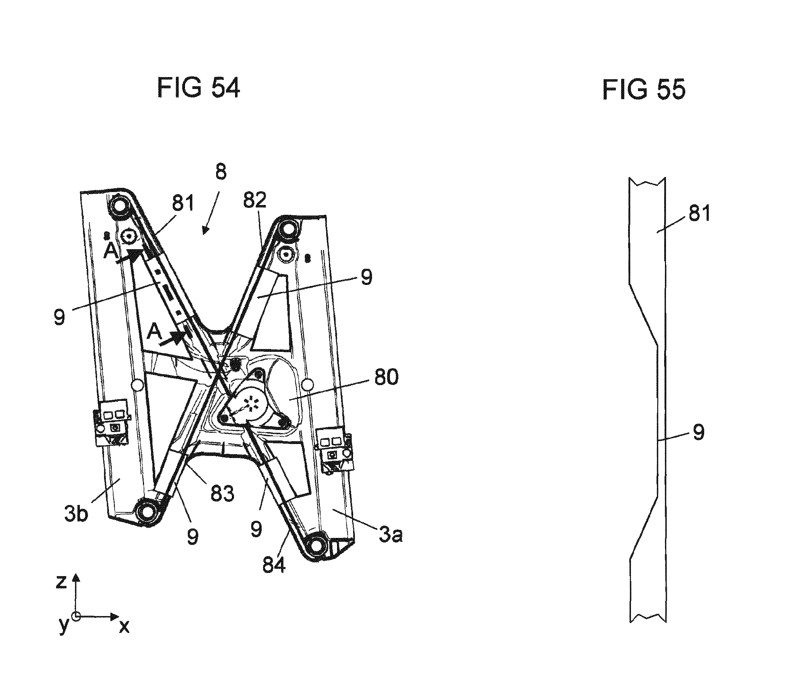

Anhand der Fig. 54 bis 65 sollen verschiedene Möglichkeiten zur Erzielung der für das Verdrillen bzw. Biegen einer Führungsschiene notwendigen Flexibilität in der Grundplatte eines Fensterhebersystems dargestellt und erläutert werden.

Wie vorstehend beschrieben, dienen die in der Grundplatte vorgesehenen flexiblen Bereiche dazu, ein Verbiegen und/oder Verdrillen der in die Grundplatte integrierten Führungsschienen und/oder ein Verwinden der Führungsschienen zueinander zuzulassen bzw. zu ermöglichen. Zur Erläuterung dieser Möglichkeiten wird von einer Grundplatte mit flexiblen Bereichen in Diagonalstreben der Grundplatte gemäß Fig. 42 mit zugehöriger Beschreibung ausgegangen. Selbstverständlich sind die nachstehend beschriebenen Möglichkeiten zur Herstellung der erforderlichen Flexibilität auch auf eine Anordnung der flexiblen Bereiche in den Querstreben oberhalb und unterhalb des starren Bereichs der Grundplatte anwendbar.

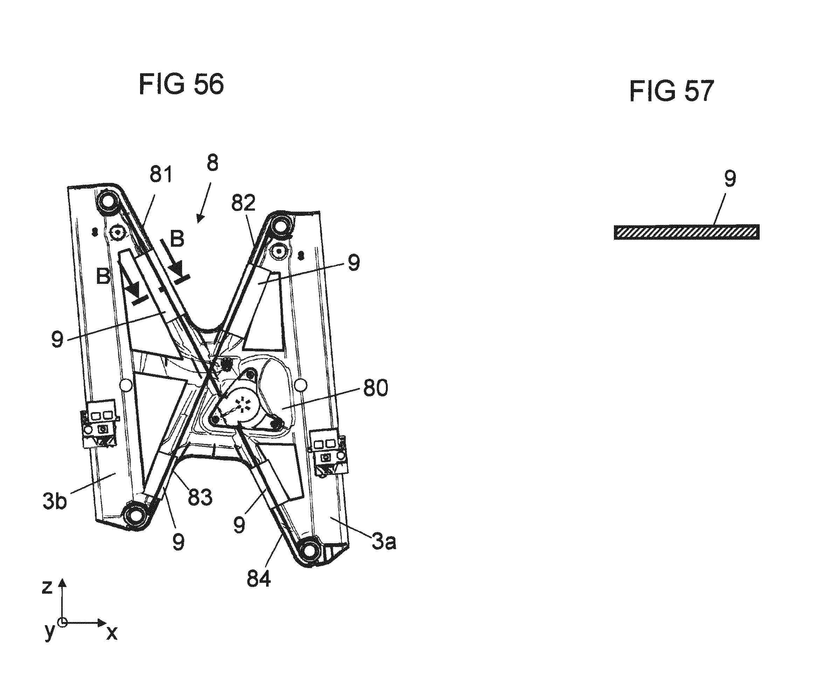

Die in den Fig. 54 und 56 dargestellten schematischen Ansichten einer Grundplatte 8 mit integrierten Führungsschienen 3a, 3b und flexiblen Bereichen 9 sowie starren Bereichen 80 entspricht der Darstellung gemäß Fig. 42 und dienen lediglich der Kennzeichnung der Schnittlinien zur Erläuterung der nachfolgend beschriebenen Varianten zur Ausbildung flexibler Bereiche an der Grundplatte 8.

Der in Fig. 55 dargestellte Längsschnitt durch die Verbindungsstrebe 81 entlang der Schnittlinie A-A gemäß Fig. 54 zeigt schematisch die Herstellung der erforderlichen Flexibilität durch Ausdünnung des Materials der Verbindungs- oder Diagonalstrebe 81 gegenüber den starren Bereichen der Diagonalstrebe 81, so dass ein flexibler Bereich 9 bei Verwendung desselben Materials durch ein geringeres Widerstandsmoment geschaffen wird.

Fig. 57 zeigt in einem Schnitt entlang der Schnittlinie B-B gemäß Fig. 56 die Möglichkeit der Herstellung eines flexiblen Bereichs 9 in der Diagonalstrebe 81 durch eine flächige bzw. flache Ausgestaltung des flexiblen Bereichs 9 bzw. durch die Verwendung eines Querschnitts mit einem geringen Widerstandsmoment. Eine weitere Möglichkeit besteht beispielsweise darin, im flexiblen Bereich ein U-Profil mit eng aneinander liegenden Schenkeln des U-Profils vorzusehen, während der übrige, starre Bereich der Diagonalstrebe 81 aus einem U-Profil mit weiter zueinander beabstandeten Schenkeln und damit höherem Widerstandsmoment gebildet wird.

Eine weitere Möglichkeit zur Herstellung flexibler Bereiche oder Abschnitte in einer Grundplatte 8 mit integrierten Führungsschienen ist durch die Kombination der beiden vorstehend beschriebenen Möglichkeiten gegeben, indem im flexiblen Abschnitt 9 einer Diagonal- oder Querstrebe 81 - 87 sowohl das Material ausgedünnt als auch flächig ausgestaltet bzw. durch die Verwendung eines Querschnitts mit geringem Widerstandsmoment "geschwächt" wird.

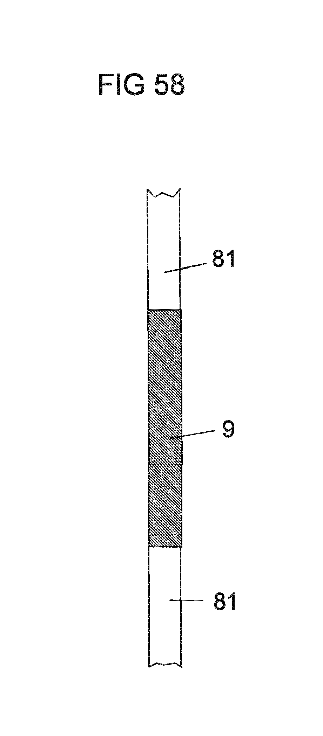

Fig. 58 veranschaulicht in einem Schnitt entlang der Schnittlinie A-A gemäß Fig. 54 die Möglichkeit der Herstellung eines flexiblen Abschnitts 9 in der Diagonalstrebe 81 durch eine Anwendung der 2K-Technik, indem der starre Bereich der Diagonalstrebe 81 aus einer ersten Komponente, bestehend aus einem starren Material, beispielsweise einem langglasfaserverstärkten Kunststoff, wie Polypropylen LFG30 verwendet wird, während der flexible Bereich 9 durch eine zweite Komponente aus einem flexiblen Material, beispielsweise einem thermoplastischen Elastomer (TPE) oder als Variante aus einem Material mit einem geringen Elastizitätsmodul, wie unverstärktem Polypropylen, hergestellt wird. Voraussetzung für diese Art der Schaffung flexibler Bereiche oder Abschnitte in einer Grundplatte 8 mit integrierten Führungsschienen ist, dass die für die 2K-Technik eingesetzten Kunststoffe miteinander verträglich sind.

Durch eine Kombination der 2K-Technik mit der Möglichkeit der Herstellung der erforderlichen Flexibilität durch flächige Ausgestaltung der flexiblen Bereiche oder Abschnitte bzw. durch die Verwendung von Querschnitten mit geringen Widerstandsmomenten ist eine weitere Möglichkeit zur Schaffung flexibler Bereiche oder Abschnitte in den Streben 81 - 87 gegeben.

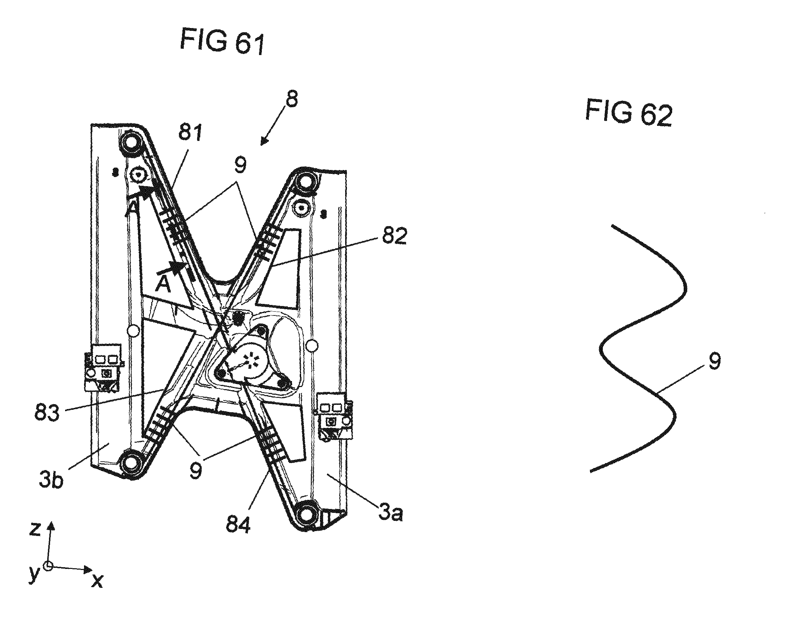

In den Fig. 61 und 62 ist in einer Draufsicht auf eine Grundplatte 8 mit integrierten Führungsschienen sowie in einem in Fig. 62 dargestellten Schnitt entlang der Schnittlinie A-A gemäß Fig. 61 das Prinzip der Herstellung eines flexiblen Abschnitts in einer Verbindungsstrebe durch die Federwirkung einer wellenartigen Ausgestaltung des flexiblen Bereichs 9 schematisch dargestellt. Unter der Bezeichnung "wellenartige Ausgestaltung" wird in diesem Zusammenhang verstanden, dass durch Wellung mehr Material auf gleicher Länge vorgesehen ist, wobei die Richtung der Wellung, das heißt die Ausrichtung der Berge und Täler der Wellenform die Richtung der Flexibilität vorgibt.

In der in Fig. 61 schematisch dargestellten Ausrichtung der wellenartigen Ausgestaltung des flexiblen Bereichs 9 wird die Flexibilität senkrecht zur Ausrichtung der Diagonalstreben 81 - 84 erhöht, so dass auch ein unterschiedliches Verdrillen und Verbiegen der Führungsschienen 3a und 3b zueinander sowie ein Verbinden der Führungsschienen 3a, 3b zueinander möglich ist.

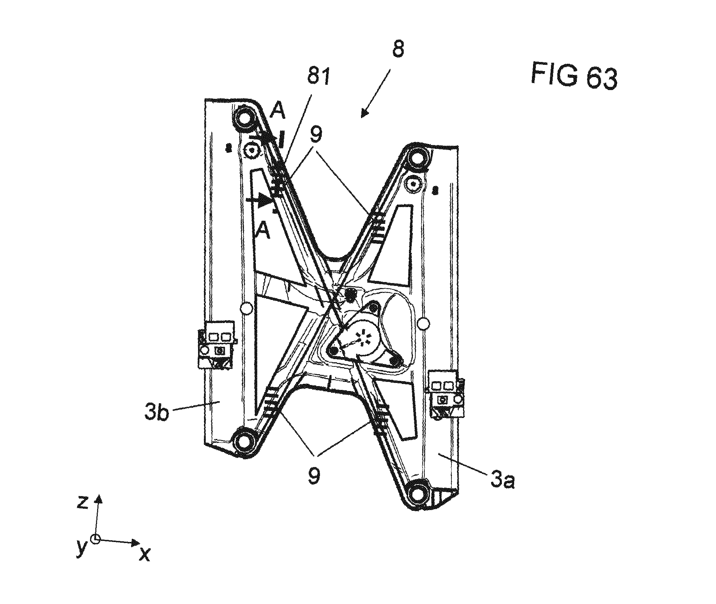

Alternativ kann gemäß der schematischen Darstellung in Fig. 63 die wellenartige Ausgestaltung zur Herstellung eines flexiblen Bereichs in Richtung der Fahrzeughochachse bzw. z-Achse erfolgen, wodurch eine Biegung der Führungsschienen 3a, 3b um die Fahrzeuglängsachse bzw. x-Achse ermöglicht wird.

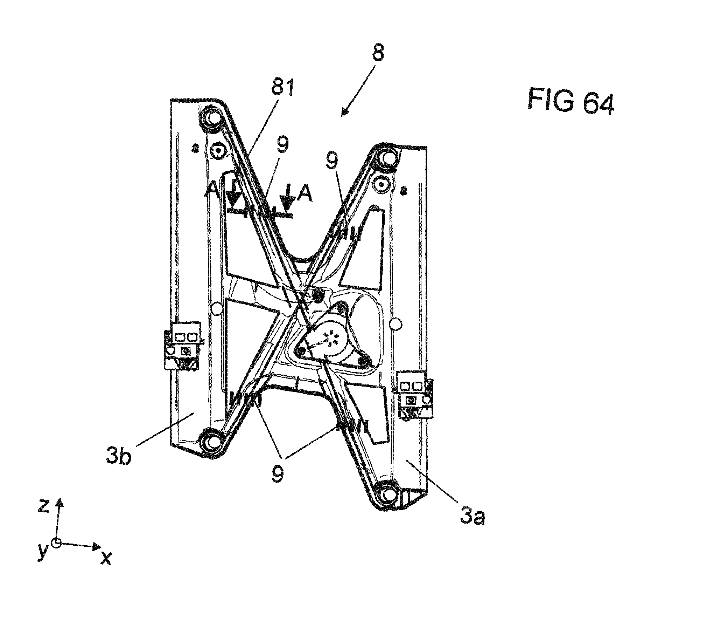

Alternativ kann gemäß der Prinzipdarstellung in Fig. 64 eine wellenartige Ausgestaltung des flexiblen Bereichs mit einer Ausrichtung senkrecht zu der Ausrichtung der Wellenform gemäß Fig. 63 vorgesehen werden, die eine Biegung um die Fahrzeughochachse oder z-Achse ermöglicht.

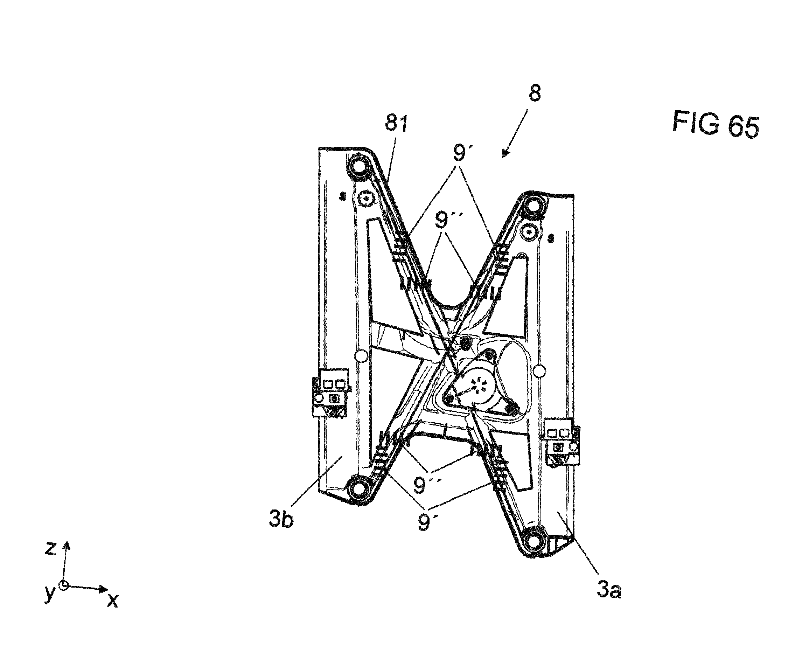

Auch bei einer wellenartigen Ausgestaltung des Materials zur Herstellung eines flexiblen Bereichs oder Abschnitts in einer Diagonal- oder Querstrebe der Grundplatte 8 mit integrierten Führungsschienen 3a, 3b ist eine Kombination der beiden vorstehend beschriebenen Ausrichtungen der Wellenform möglich wie in Fig. 65 schematisch durch die den Wellenbergen bzw. Tälern entsprechenden Striche angedeutet ist. In dieser Ausführungsform wird ein flexibler Bereich 9' zur Biegung der Führungsschienen 3a, 3b um die Fahrzeuglängsachse oder x-Achse und ein flexibler Bereich 9" für die Schaffung eines flexiblen Bereichs zur Biegung um die Fahrzeughochachse oder z-Achse geschaffen.

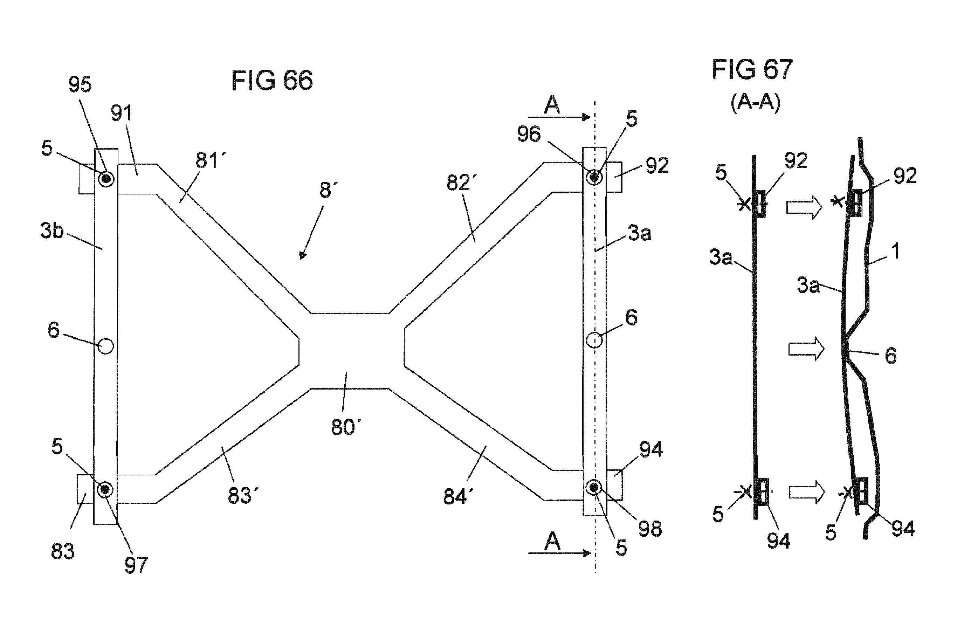

Die durch die erfindungsgemäße Lösung geschaffene Möglichkeit, einzelne oder ein geringes Sortiment vorgefertigter Führungsschienen oder Grundplatten mit integrierten Führungsschienen bzw. Aggregateträger mit integrierten Führungsabschnitten für unterschiedliche Fahrzeuge und Fahrzeugtypen unterschiedlicher Fahrzeughersteller bereitzustellen und damit eine wirtschaftliche Fertigung von Führungsschienen und Grundplatten bzw. Aggregateträgern zu gewährleisten, kann noch dadurch gesteigert werden, dass gemäß den Fig. 66 bis 70 Montagerrahmen mit variablen, das heißt separat mit dem Montagerahmen verbindbarer Führungsschienen für einen baureihenübergreifenden Einsatz vorgesehen werden.

Fig. 66 zeigt in einer schematischen Draufsicht und Fig. 67 in einem Schnitt entlang der Schnittlinie A-A gemäß Fig. 66 einen Montagerahmen 8', der analog zu den vorstehend beschriebenen Grundplatten 8 einen mittleren starren Bereich 80' und von dem starren Bereich 80' ausgehende Diagonalstreben 81', 82', 83' und 84' mit flexiblen Abschnitten aufweist. Die Enden der Diagonalstreben 81' bis 84' gehen in abgewinkelte Schenkel 91 bis 94 über, in denen variable Anbindungen 95 bis 98 für die Anbringung von Führungsschienen 3a, 3b vorgesehen sind, die gleichzeitig als Befestigungsstellen 5 zur Verbindung des Montagerahmens 8' mit den an dem Montagerahmen 8' angefügten Führungsschienen 3a, 3b mit einem Türrohbau vorgesehen sind. Zusätzliche Abstützstellen 6 an einer oder beiden Führungsschienen 3a, 3b können zur gezielten Verformung, das heißt Verdrillung oder Biegung einer oder beider Führungsschienen 3a, 3b vorgesehen werden.

Fig. 67 zeigt in einem schematischen Längsschnitt das Ansetzen und Verbinden des Montagerahmens 8' mit den mit dem Montagerahmen 8' verbundenen Führungsschienen 3a, 3b an den Türrohbau einer Fahrzeugtür 1, indem der Montagerahmen 8' zusammen mit den zuvor mit dem Montagerahmen 8' verbundenen Führungsschienen 3a, 3b an den Türrohbau 1 angesetzt und mittels der Befestigungsstellen 5 mit dem Türrohbau verbunden wird, wobei die Abstützstelle 6, beispielsweise ein in den Türrohbau integrierter Seitenaufprallträger als Abstützstelle wirksam ist, um eine vorgegebene Biegung und/oder Verdrillung der Führungsschienen 3a, 3b oder einer von beiden Führungsschienen 3a, 3b zu erzielen.

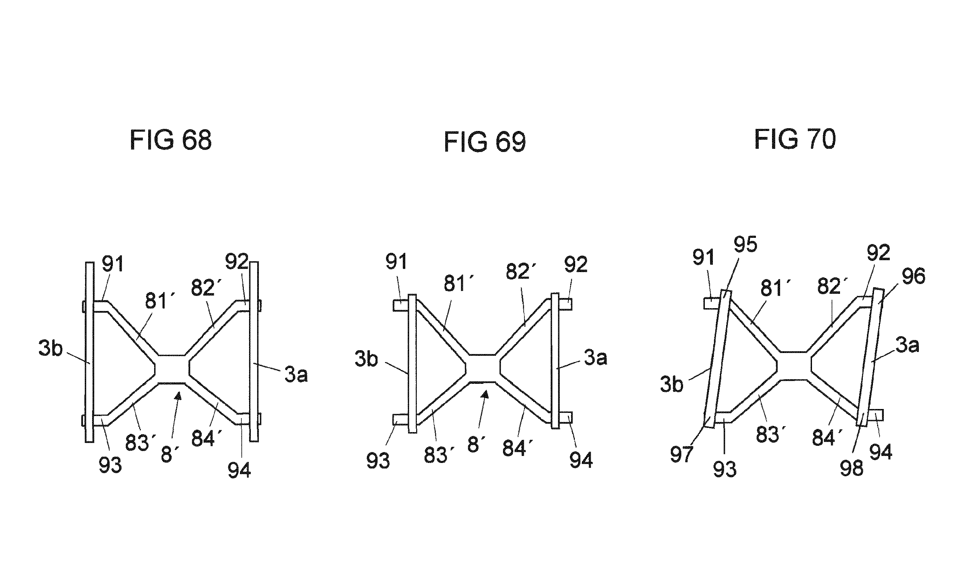

Die schematischen Darstellungen der Fig. 68 bis 70 zeigen den variablen Einsatz des in Fig. 66 in schematischer Draufsicht dargestellten Montagerahmens 8', indem derselbe Montagerahmen 8' für unterschiedliche Fahrzeugtüren und Abzugskinematiken von Fensterhebereinheiten bereitgestellt wird, der lediglich mit unterschiedlich langen Führungsschienen 3a. 3b verbunden wird. Dabei ermöglicht die Verbindung der Führungsschienen 3a, 3b mit entsprechenden Anbindungen 95 bis 98 an den abgewinkelten Schenkeln 91 bis 94 unterschiedliche Abstände zwischen den Führungsschienen 3a, 3b sowie unterschiedliche Abzugswinkel der Führungsschienen 3a, 3b.

Entsprechend den schematischen Darstellungen der Fig. 68 und 69 können unterschiedliche Verstellwege und Verstellrichtungen von Fensterscheiben über unterschiedliche Längen der Führungsschienen 3a, 3b sowie unterschiedliche Abstände der Führungsschienen 3a, 3b zueinander realisiert werden.

Ein Vergleich der schematischen Darstellung der Fig. 69 und 70 zeigt, dass durch die Verbindung der separaten Führungsschienen 3a, 3b mit dem Montagerahmen 8' an unterschiedlichen Stellen der abgewinkelten Schenkel 91 bis 94 unterschiedliche Abzugswinkel realisiert werden können, um unterschiedliche Abzüge von Fensterscheiben in verschiedenen Fahrzeugtüren zu realisieren.

### Bezugszeichenliste

- 1: Fahrzeugtür
- 1 a: Türaußenblech
- 1 b: Türinnenblech
- 1 c: Dichtung
- 1 d: Türausschnitt
- 1 e, 1f: Auskragungen
- 1g: Crashbarriere
- 2: Trägerelement
- 3: Führungsschiene
- 3': vorgebogene Führungsschiene
- 3a: Führungsschiene (A-Schiene)
- 3b: Führungsschiene (B-Schiene)
- 4: Befestigungsaufnahme
- 5, 5': Befestigungsstellen
- 6: Abstützstellen
- 7: Klebstoff
- 8: Grundplatte mit integrierten Führungsschienen
- 8': Montagerahmen
- 9: Flexibler Bereich der Grundplatte
- 10: Fensterheberantrieb
- 11: Mitnehmer
- 12: Seil
- 13: Fensterscheibe
- 14: Seilrolle
- 15: Kassette
- 16 - 18: Stufenbolzen mit Innengewinde
- 19: Schraube
- 20: Öffnung
- 21: Schenkel
- 22: kastenförmige Ausformung
- 23: Kammern
- 24: Abstandshalter
- 25: rechteck- oder trapezförmige Vertiefung
- 26: seitliche Dome oder Erhebungen
- 27: trapezförmiger Dom
- 28: Schenkel
- 29: strukturierte Oberfläche
- 30: Gleit- und Führungsschenkel
- 31: Einleger (Vlies, Gewebe, Papier, Folie)
- 32: Einleger (Aluminium- oder Kunststoffprofil)
- 33: Koextrudierter Kunststoff für optimale Gleiteigenschaften
- 34: rechteck- oder trapezförmige Vertiefung
- 35: topfförmigen Öffnung
- 36: Aussparung
- 37: Öffnung
- 41 - 48: Befestigungsaufnahme
- 51 - 58: Befestigungsstelle
- 61 - 63: Abstützstelle
- 70: Klebstofffläche
- 71 - 73: Klebstoffschichten
- 74: unterer Anschlag
- 74': Einstecktasche
- 75, 76: Seitenanschläge
- 77: Clips
- 78: Niet
- 79: Schraube
- 80: Starrer Bereich der Grundplatte
- 81 - 84: Verbindungsabschnitte (Diagonalstreben)
- 85 - 87: Verbindungsabschnitte (Querstreben)
- 88: Querträger
- 91 - 94: abgewinkelte Schenkel
- 95 - 98: variable Anbindungen
- 131 - 134: Umlenkrollen
- 151, 152: Auflageflächen
- 180: Auflagefläche
- 200: domartige Ausstülpung
- 300: vorgebogene Grundfläche der Führungsschiene
- R: Biegeradius
- X: Fahrzeuglängsachse
- Y: Fahrzeugquerachse
- Z: Fahrzeughochachse
- LS: Laserstrahl

## Patentansprüche

1. Fahrzeug-Fensterheber mit einer Grundplatte, in die mindestens eine biegbare und/oder verdrillbare Führungsschiene zur Führung eines mit einer Fensterscheibe koppelbaren Mitnehmers entlang einer Verstellrichtung integriert ist und die Befestigungsstellen aufweist, die mit Befestigungsaufnahmen einer Fahrzeugtür verbindbar sind, wobei eine Verdrillung und/oder Biegung der Führungsschiene durch Verbinden der Befestigungsstellen der Grundplatte mit den Befestigungsaufnahmen der Fahrzeugtür erfolgt,
**dadurch gekennzeichnet,**
**dass** die Führungsschiene (3; 3a, 3b) über Verbindungsabschnitte (81 - 87) mit einem starren Bereich (80) der Grundplatte (8, 8') verbunden ist und dass mindestens ein Verbindungsabschnitt (81 - 87) einen flexiblen Bereich (9) aufweist.

2. Fensterheber nach Anspruch 1, **dadurch gekennzeichnet, dass** die Führungsschiene (3; 3a, 3b) um die Fahrzeuglängsachse (X-Achse) biegbar und um die Fahrzeughochachse (Z-Achse) verdrillbar ist.

3. Fensterheber nach Anspruch 1 oder 2, **dadurch gekennzeichnet, dass** der starre Bereich (80) der Grundplatte (8, 8') zwischen zwei Führungsschienen (3; 3a, 3b) angeordnet ist und dass die Befestigungsstellen (5, 5') an den Enden der Führungsschienen (3; 3a, 3b) und mindestens eine Abstützstelle (6) oder weitere Befestigungsstelle (5, 5') zwischen den endseitigen Befestigungsstellen (5, 5') der Führungsschienen (3; 3a, 3b) vorgesehen sind, wobei insbesondere die Befestigungsstellen (5, 5') zumindest teilweise an den Achsen von Umlenkrollen (131 - 134) des Fensterhebers zur Führung und Umlenkung eines Fensterheberseils (12) angeordnet sind.

4. Fensterheber nach mindestens einem der vorangehenden Ansprüche 1 bis 3, **dadurch gekennzeichnet, dass** die Abstützstelle (6) aus einem in den Türrohbau (1 a, 1 b) der Fahrzeugtür (1) integrierten Bauteil, insbesondere aus einer Crashbarriere (1 g), besteht.

5. Fensterheber nach Anspruch 3, **dadurch gekennzeichnet, dass** die Verbindungsabschnitte (81 - 87) als Streben ausgebildet sind, die mit den Enden und einem mittleren Abschnitt der Führungsschienen (3; 3a, 3b) verbunden sind.

6. Fensterheber nach Anspruch 4, **dadurch gekennzeichnet, dass** mit den Enden der Führungsschienen (3; 3a, 3b) verbundene Diagonalstreben (81 - 84) flexible Bereiche (9) enthalten oder dass mit dem mittleren Abschnitt der Führungsschienen (3; 3a, 3b) verbundenen Querstreben (85 - 87) flexible Bereiche (9) enthalten.

7. Fensterheber nach mindestens einem der vorangehenden Ansprüche, **dadurch gekennzeichnet, dass** der flexible Bereich (9) aus einer Verringerung des Querschnitts gegenüber dem Querschnitt eines starren Bereichs der Verbindungsabschnitte (81 - 87) gebildet ist.

8. Fensterheber nach mindestens einem der vorangehenden Ansprüche, **dadurch gekennzeichnet, dass** der flexible Bereich (9) aus einer Querschnittsform mit einem geringeren Widerstandsmoment als die Querschnittsform des starren Bereichs besteht.

9. Fensterheber nach mindestens einem der vorangehenden Ansprüche 1 bis 7, **dadurch gekennzeichnet, dass** der starre Bereich (80) der Grundplatte (8, 8') und/oder der Verbindungsabschnitte (81 - 87) aus einem starren Material, insbesondere aus einem langglasfaserverstärkten Kunststoff, und der flexible Bereich aus einem weniger starren oder flexiblen Material, insbesondere einem thermoplastischen Elastomer (TPE) oder einem Material mit geringerem Elastizitätsmodul, insbesondere unverstärktem Polypropylen, besteht.

10. Fensterheber nach mindestens einem der vorangehenden Ansprüche 1 bis 6, **dadurch gekennzeichnet, dass** der flexible Bereich (9) der Verbindungsabschnitte (81 - 87) aus einer wellenartigen Struktur der Verbindungsabschnitte (81 - 87) besteht.

11. Fensterheber nach Anspruch 10, **dadurch gekennzeichnet, dass** die wellenartige Struktur der Verbindungsabschnitte (81 - 87) in Längsrichtung der Verbindungsabschnitte (81 - 87), in Richtung der Fahrzeughochachse (Z-Achse) oder in Richtung der Fahrzeuglängsachse (X-Achse) verläuft.

12. Fensterheber nach mindestens einem der vorangehenden Ansprüche 9 bis 11, **dadurch gekennzeichnet, dass** mehrere flexible Bereiche (9) aus einer wellenartigen Struktur in den Verbindungsabschnitten (81 - 87) vorgesehen sind.

13. Fensterheber nach Anspruch 11, **dadurch gekennzeichnet, dass** sowohl in Richtung der Fahrzeughochachse (Z-Achse) als auch in Richtung der Fahrzeuglängsachse (X-Achse) verlaufende wellenartige Strukturen in den Verbindungsabschnitten (81 - 87) vorgesehen sind.

14. Fensterheber nach mindestens einem der vorangehenden Ansprüche, **dadurch gekennzeichnet, dass** die Grundplatte aus einem Montagerahmen (8') mit Verbindungsabschnitten (81' - 84') besteht, an deren Endbereiche (91 - 94) Anlenkungen (95 - 98) zur Aufnahme von Führungsschienen (3; 3a, 3b) für unterschiedliche Fensterheber bzw. Fahrzeugtüren angeordnet sind, wobei insbesondere der Montagerahmen (8') X-förmig mit einem starren, mittleren Bereich (80') und vier diagonal vom starren mittleren Bereich ausgehenden Diagonalstreben (81' - 84') ausgebildet ist, deren abgewinkelte Endbereiche (91 - 94) variable Anlenkungen (95 - 98) zur Aufnahme unterschiedlicher Führungsschienen (3; 3a, 3b) aufweisen.

15. Fahrzeug-Fensterheber mit einer Grundplatte, in die mindestens eine biegbare und/oder verdrillbare Führungsschiene zur Führung eines mit einer Fensterscheibe koppelbaren Mitnehmers entlang einer Verstellrichtung integriert ist und die Befestigungsstellen aufweist, die mit Befestigungsaufnahmen einer Fahrzeugtür verbindbar sind, wobei eine Verdrillung und/oder Biegung der Führungsschiene durch Verbinden der Befestigungsstellen der Grundplatte mit den Befestigungsaufnahmen der Fahrzeugtür erfolgt,
**dadurch gekennzeichnet,**
**dass** die Grundplatte (8) zwei vergleichsweise flexible Führungsschienen (3; 3a, 3b) aufweist, deren mittlere Bereiche über einen vergleichsweise starren Querträger (88) miteinander verbunden sind, an dessen Enden Befestigungsstellen (5) angeordnet sind.
